(19) Europäisches Patentamt
European Patent Office
Office européen des brevets

(11) **EP 4 664 163 A1**

(12) **EUROPEAN PATENT APPLICATION**

(43) Date of publication:
**17.12.2025   Bulletin 2025/51**

(21) Application number: **25180625.3**

(22) Date of filing: **04.06.2025**

(51) International Patent Classification (IPC):
**G02B 5/20** (2006.01)   **G02B 13/00** (2006.01)
**G02B 5/22** (2006.01)

(52) Cooperative Patent Classification (CPC):
**G02B 5/208; G02B 13/0035; G02B 13/004;**
G02B 5/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.06.2024   US 202463656197 P**

(71) Applicant: **Largan Precision Co. Ltd.
Taichung City 408 (TW)**

(72) Inventors:
• **Chang, Pei-Chi
408 Taichung City (TW)**

• **Tsai, Wen-Yu
408 Taichung City (TW)**
• **Hong, Yu-Jie
408 Taichung City (TW)**
• **Yeh, Kuan-Ting
408 Taichung City (TW)**
• **Teng, Chun-Hung
408 Taichung City (TW)**

(74) Representative: **Lippert Stachow Patentanwälte
Rechtsanwälte
Partnerschaft mbB
Frankenforster Strasse 135-137
51427 Bergisch Gladbach (DE)**

(54) **OPTICAL LENS ASSEMBLY AND ELECTRONIC DEVICE**

(57)   An optical lens assembly includes at least three optical lens elements. The at least three optical lens elements include, in order from an object side to an image side of the optical lens assembly, a first optical lens element, a second optical lens element and a third optical lens element. The at least three optical lens elements include a blue-glass lens element, and the at least three optical lens elements include a long-wavelength absorbing lens element.

Fig. 2

EP 4 664 163 A1

## Description

## BACKGROUND

Technical Field

The present disclosure relates to an optical lens assembly and an electronic device. More particularly, the present disclosure relates to an optical lens assembly and an electronic device including a blue-glass lens element.

Description of Related Art

In current, the method to filter out the near-infrared light of the optical lens assembly is to arrange a blue glass plate having a near-infrared light filtering coating membrane on the surface thereof in front of the image sensor so as to serve as a filter. The combined use of the near-infrared light filtering coating membrane and the blue glass material can reduce the interference in the optical imaging caused by the near-infrared light. However, when the near-infrared light is filtered out, the visible light will reflect back and forth among the near-infrared light filtering coating membrane, the blue glass plate and the image sensor. Because the reflected light incidents in the image sensor multiple times, the petal-shaped flares that are difficult to eliminate will be generated, resulting in a significant reduction in the imaging quality. Further, the blue glass plate and the near-infrared light filtering coating membrane disposed on the surface thereof is an important arrangement that cannot be changed easily, and thus if the shortcoming caused by the aforementioned arrangement wants to be solved, a new arrangement for filtering the near-infrared light needs to be developed.

## SUMMARY

According to one aspect of the present disclosure, an optical lens assembly includes at least three optical lens elements. The at least three optical lens elements include, in order from an object side to an image side of the optical lens assembly, a first optical lens element, a second optical lens element and a third optical lens element. The at least three optical lens elements include a blue-glass lens element, and the at least three optical lens elements include a long-wavelength absorbing lens element. When a sixth arranging factor of the blue-glass lens element is Fb6, a central thickness along an optical axis of the blue-glass lens element is CTB, a central thickness along an optical axis of the long-wavelength absorbing lens element is CTA, and an axial distance between an object-side surface of the first optical lens element and an image-side surface of a last one of the optical lens elements is TD, the following conditions are satisfied: $0.85 \leq Fb6 \leq 1.50$; and $0.15 \leq (CTB+CTA)/TD \leq 0.40$.

According to the optical lens assembly of the aforementioned aspect, when a first arranging factor of the blue-glass lens element is Fb1, the following condition can be satisfied: $Fb1 \leq 1.50$.

According to the optical lens assembly of the aforementioned aspect, when a second arranging factor of the blue-glass lens element is Fb2, the following condition can be satisfied: $Fb2 \leq 0.30$.

According to the optical lens assembly of the aforementioned aspect, when a third arranging factor of the blue-glass lens element is Fb3, the following condition can be satisfied: $0.50 \leq Fb3 \leq 2.00$.

According to the optical lens assembly of the aforementioned aspect, when a fourth arranging factor of the blue-glass lens element is Fb4, the following condition can be satisfied: $Fb4 \leq 0.10$.

According to the optical lens assembly of the aforementioned aspect, when a fifth arranging factor of the blue-glass lens element is Fb5, the following condition can be satisfied: $0.05 \leq Fb5 \leq 0.40$.

According to the optical lens assembly of the aforementioned aspect, when an effective diameter arranging factor of the blue-glass lens element is FbY, the following condition can be satisfied: $FbY \leq 0.27$.

According to the optical lens assembly of the aforementioned aspect, when a comprehensive arranging factor of the blue-glass lens element is FB, the following condition can be satisfied: $1.00 \leq FB$.

According to the optical lens assembly of the aforementioned aspect, when a main arranging factor of the long-wavelength absorbing lens element is FA, the following condition can be satisfied: $1.50 \leq FA$.

According to the optical lens assembly of the aforementioned aspect, when a material arranging factor of the long-wavelength absorbing lens element is Fam, the following condition can be satisfied: $30.00 \leq Fam \leq 40.00$.

According to the optical lens assembly of the aforementioned aspect, when the central thickness along the optical axis of the blue-glass lens element is CTB, and the central thickness along the optical axis of the long-wavelength absorbing lens element is CTA, the following condition can be satisfied: $1.20 \leq CTB/CTA$.

According to the optical lens assembly of the aforementioned aspect, when a wavelength at 50% transmittance of the optical lens assembly is Wt50, the following condition can be satisfied: $600 \, nm \leq Wt50 \leq 650 \, nm$.

According to the optical lens assembly of the aforementioned aspect, when an average transmittance in a wavelength range of 600 nm - 650 nm of the optical lens assembly is T6065, the following condition can be satisfied: T6065 ≤ 50.00%.

According to the optical lens assembly of the aforementioned aspect, when an average transmittance in a wavelength range of 650 nm - 700 nm of the optical lens assembly is T6570, the following condition can be satisfied: T6570 ≤ 20.00%.

According to the optical lens assembly of the aforementioned aspect, when an average transmittance in a wavelength range of 700 nm - 1050 nm of the optical lens assembly is T70105, the following condition can be satisfied: T70105 ≤ 3.00%.

According to the optical lens assembly of the aforementioned aspect, when a transmittance at a wavelength of 850 nm of the optical lens assembly is T85, the following condition can be satisfied: T85 ≤ 2.50%.

According to the optical lens assembly of the aforementioned aspect, when a transmittance at a wavelength of 940 nm of the optical lens assembly is T94, the following condition can be satisfied: T94 ≤ 2.50%.

According to the optical lens assembly of the aforementioned aspect, when a transmittance at a wavelength of 1050 nm of the optical lens assembly is T105, and the following condition can be satisfied: T105 ≤ 2.50%.

According to another aspect of the present disclosure, an electronic device includes the optical lens assembly of the aforementioned aspect.

According to further another aspect of the present disclosure, an optical lens assembly includes at least three optical lens elements. The at least three optical lens elements include, in order from an object side to an image side of the optical lens assembly, a first optical lens element, a second optical lens element and a third optical lens element. The at least three optical lens elements include a blue-glass lens element, the at least three optical lens elements include a long-wavelength filtering lens element, the long-wavelength filtering lens element includes a long-wavelength filtering coating membrane, the long-wavelength filtering coating membrane includes at least one low refractive index layer and at least one high refractive index layer, and the long-wavelength filtering coating membrane is formed by alternately stacking the at least one high refractive index layer and the at least one low refractive index layer. When a sixth arranging factor of the blue-glass lens element is Fb6, a coating arranging factor of an object-side surface of the long-wavelength filtering lens element is FcR1, and a coating arranging factor of an image-side surface of the long-wavelength filtering lens element is FcR2, the following conditions are satisfied: 0.80 ≤ Fb6 ≤ 1.40; and at least one of 10.00 ≤ FcR1 and 10.00 ≤ FcR2.

According to the optical lens assembly of the aforementioned aspect, the blue-glass lens element and the long-wavelength filtering lens element can be the same one of the optical lens elements, and when a merge arranging factor of an object-side surface of the blue-glass lens element is FbcR1, and a merge arranging factor of an image-side surface of the blue-glass lens element is FbcR2, the following conditions can be satisfied: 6.00 ≤ FbcR1; or 6.00 ≤ FbcR2.

According to the optical lens assembly of the aforementioned aspect, when a first arranging factor of the blue-glass lens element is Fb1, the following condition can be satisfied: Fb1 ≤ 1.40.

According to the optical lens assembly of the aforementioned aspect, when a second arranging factor of the blue-glass lens element is Fb2, the following condition can be satisfied: Fb2 ≤ 0.25.

According to the optical lens assembly of the aforementioned aspect, when a third arranging factor of the blue-glass lens element is Fb3, the following condition can be satisfied: 0.60 ≤ Fb3 ≤ 1.80.

According to the optical lens assembly of the aforementioned aspect, when a fourth arranging factor of the blue-glass lens element is Fb4, the following condition can be satisfied: Fb4 ≤ 0.08.

According to the optical lens assembly of the aforementioned aspect, when a fifth arranging factor of the blue-glass lens element is Fb5, the following condition can be satisfied: 0.08 ≤ Fb5 ≤ 0.30.

According to the optical lens assembly of the aforementioned aspect, when an effective diameter arranging factor of the blue-glass lens element is FbY, the following condition can be satisfied: 0 ≤ FbY ≤ 0.26.

According to the optical lens assembly of the aforementioned aspect, when a comprehensive arranging factor of the blue-glass lens element is FB, the following condition can be satisfied: 2.00 ≤ FB ≤ ∞.

According to the optical lens assembly of the aforementioned aspect, when a total focal length of the optical lens assembly is F, and a maximum field of view of the optical lens assembly is FOV, the following condition can be satisfied: tan(FOV/2)×F ≤ 4.0.

According to the optical lens assembly of the aforementioned aspect, when a total number of layers of the long-wavelength filtering coating membrane is tLs, the following condition can be satisfied: 20 ≤ tLs ≤ 60.

According to the optical lens assembly of the aforementioned aspect, when a total thickness of the long-wavelength filtering coating membrane is tTk, the following condition can be satisfied: 4500 nm ≤ tTk ≤ 8000 nm.

According to the optical lens assembly of the aforementioned aspect, when a total thickness of the high refractive index layer is HtTk, and a total thickness of the low refractive index layer is LtTk, the following condition can be satisfied: 1.30 ≤ LtTk/HtTk ≤ 1.80.

According to the optical lens assembly of the aforementioned aspect, when a refractive index of the high refractive index layer is NH, and a refractive index of the low refractive index layer is NL, the following condition can be satisfied: 0.80 ≤ NH-NL ≤ 1.50.

According to still another aspect of the present disclosure, an electronic device includes the optical lens assembly of the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1 is a relationship diagram between transmittances and wavelengths of an optical lens assembly according to Comparative example 1.

Fig. 2 is a relationship diagram between transmittances and wavelengths of an optical lens assembly according to Example 1.

Fig. 3 is a relationship diagram between transmittances and wavelengths of an optical lens assembly according to Example 2.

## DETAILED DESCRIPTION

The present disclosure provides an optical lens assembly and an electronic device, and by adding the blue glass material to the optical lens element, the arrangement of the blue glass plate can be omitted and the visible light can be prevented from reflecting to the image sensor. Thus, it is favorable for reducing the petal-shaped flares and enhancing the imaging quality. Further, by limiting the sixth arranging factor of the blue-glass lens element, the differences in the optical paths among five of the evenly divided fields of view and the 0.0 field of view of the chief ray can be reduced, and the filtering difference of the near-infrared light on each of the fields of view of the blue-glass lens element can be preliminarily reduced.

According to one aspect of the present disclosure, an optical lens assembly includes at least three optical lens elements, and the at least three optical lens elements include, in order from an object side to an image side of the optical lens assembly, a first optical lens element, a second optical lens element and a third optical lens element. The at least three optical lens elements include a blue-glass lens element, and the at least three optical lens elements include a long-wavelength absorbing lens element. When a sixth arranging factor of the blue-glass lens element is Fb6, a central thickness along an optical axis of the blue-glass lens element is CTB, a central thickness along an optical axis of the long-wavelength absorbing lens element is CTA, and an axial distance between an object-side surface of the first optical lens element and an image-side surface of a last one of the optical lens elements is TD, the following conditions are satisfied: $0.85 \leq Fb6 \leq 1.50$; and $0.15 \leq (CTB+CTA)/TD \leq 0.40$. Therefore, by adding the blue glass material to the optical lens element, the arrangement of the blue glass plate can be omitted and the visible light can be prevented from reflecting to the image sensor. Further, by limiting the sixth arranging factor of the blue-glass lens element, the differences in the optical paths among five of the evenly divided fields of view and the 0.0 field of view of the chief ray can be reduced, and the filtering difference of the near-infrared light on each of the fields of view of the blue-glass lens element can be preliminarily reduced. Further, by satisfying the ratio of the sum of the thicknesses of the blue-glass lens element and the long-wavelength absorbing lens element to the optical lens assembly, it is favorable for avoiding the red light to be filtered out due to the excessive thickness and preventing the thickness from being too thin to be unable to filter out the near-infrared light, and thus a proper filtering effect of the optical lens assembly can be obtained.

According to another aspect of the present disclosure, an optical lens assembly includes at least three optical lens elements, and the at least three optical lens elements include, in order from an object side to an image side of the optical lens assembly, a first optical lens element, a second optical lens element and a third optical lens element. The at least three optical lens elements include a blue-glass lens element, the at least three optical lens elements include a long-wavelength filtering lens element, the long-wavelength filtering lens element includes a long-wavelength filtering coating membrane, the long-wavelength filtering coating membrane includes at least one low refractive index layer and at least one high refractive index layer, and the long-wavelength filtering coating membrane is formed by alternately stacking the at least one high refractive index layer and the at least one low refractive index layer. When a sixth arranging factor of the blue-glass lens element is Fb6, a coating arranging factor of an object-side surface of the long-wavelength filtering lens element object-side surface is FcR1, and a coating arranging factor of an image-side surface of the long-wavelength filtering lens element is FcR2, the following conditions are satisfied: $0.80 \leq Fb6 \leq 1.40$; and at least one of $10.00 \leq FcR1$ and $10.00 \leq FcR2$. Therefore, by adding the blue glass material to the optical lens element, the arrangement of the blue glass plate can be omitted and the visible light can be prevented from reflecting to the image sensor. Further, by limiting the sixth arranging factor of the blue-glass lens element, the differences in the optical paths among five of the evenly divided fields of view and the 0.0 field of view of the chief ray can be reduced, and the filtering difference of the near-infrared light on each of the fields of view of the blue-glass lens element can be preliminarily reduced. Further, by satisfying the coating arranging factor of the object-side surface or the image-side surface of the long-wavelength filtering lens element, the undulations on the surface of the optical lens element can be reduced, and it is favorable for enhancing the arranging uniformity of the filter coating membrane.

According to the optical lens assembly of the present disclosure, when the sixth arranging factor of the blue-glass lens element is Fb6, the following condition can be satisfied: $0.80 \leq Fb6 \leq 1.50$. Therefore, the filtering difference of the near-infrared light on each of the fields of view of the blue-glass lens element can be reduced. Furthermore, the following condition can be satisfied: $0.85 \leq Fb6 \leq 1.40$. Furthermore, the following condition can be satisfied: $0.95 \leq Fb6 \leq 1.30$. Furthermore, the following condition can be satisfied: $1.00 \leq Fb6 \leq 1.20$. Furthermore, the following condition can be satisfied: $1.01 \leq Fb6 \leq 1.10$.

According to the optical lens assembly of the present disclosure, when the central thickness along the optical axis of the blue-glass lens element is CTB, the central thickness along the optical axis of the long-wavelength absorbing lens element is CTA, and the axial distance between the object-side surface of the first optical lens element and the image-side surface of the last one of the optical lens elements is TD, the following condition can be satisfied: $0.20 \leq (CTB+CTA)/TD \leq 0.30$. Therefore, the undulations on the surface of the optical lens element can be further reduced, and it is favorable for enhancing the arranging uniformity of the filter coating membrane. Furthermore, the following condition can be satisfied: $0.22 \leq (CTB+CTA)/TD \leq 0.26$. Furthermore, the following condition can be satisfied: $0.23 \leq (CTB+CTA)/TD \leq 0.25$.

According to the optical lens assembly of the present disclosure, when the coating arranging factor of the object-side surface of the long-wavelength filtering lens element is FcR1, the following condition can be satisfied: $15.00 \leq FcR1 \leq \infty$. By satisfying the coating arranging factor of the object-side surface of the long-wavelength filtering lens element, the undulations on the surface of the optical lens element can be reduced, and it is favorable for enhancing the arranging uniformity of the filter coating membrane. Furthermore, the following condition can be satisfied: $20.00 \leq FcR1 \leq 200.00$. Furthermore, the following condition can be satisfied: $30.00 \leq FcR1 \leq 100.00$.

According to the optical lens assembly of the present disclosure, when the coating arranging factor of the image-side surface of the long-wavelength filtering lens element is FcR2, the following condition can be satisfied: $15.00 \leq FcR2 \leq \infty$. By satisfying the coating arranging factor of the image-side surface of the long-wavelength filtering lens element, the undulations on the surface of the optical lens element can be reduced, and it is favorable for enhancing the arranging uniformity of the filter coating membrane. Furthermore, the following condition can be satisfied: $20.00 \leq FcR2 \leq 1000$. Furthermore, the following condition can be satisfied: $30.00 \leq FcR2 \leq 500.00$. Furthermore, the following condition can be satisfied: $50.00 \leq FcR2 \leq 200.00$. Furthermore, the following condition can be satisfied: $100.00 \leq FcR2 \leq 150.00$.

According to the optical lens assembly of the present disclosure, when a first arranging factor of the blue-glass lens element is Fb1, the following condition can be satisfied: $Fb1 \leq 1.50$. By limiting the first arranging factor of the blue-glass lens element, a small magnification difference of the extreme optical paths located on the thicknesses of the blue-glass lens element can be ensured, and it is favorable for reducing the filtering difference of the near-infrared light between the maximum field of view on the optical path and the minimum field of view on the optical path of the blue-glass lens element. Furthermore, the following condition can be satisfied: $Fb1 \leq 1.40$. Furthermore, the following condition can be satisfied: $Fb1 \leq 1.30$. Furthermore, the following condition can be satisfied: $Fb1 \leq 1.20$. Furthermore, the following condition can be satisfied: $1.00 \leq Fb1 \leq 1.18$. Furthermore, the following condition can be satisfied: $1.10 \leq Fb1 \leq 1.16$.

According to the optical lens assembly of the present disclosure, when a second arranging factor of the blue-glass lens element is Fb2, the following condition can be satisfied: $Fb2 \leq 0.30$. By limiting the second arranging factor of the blue-glass lens element, a smaller value difference of the extreme optical paths located on the thicknesses of the blue-glass lens element can be ensured, and it is favorable for further reducing the filtering difference of the near-infrared light between the maximum field of view on the optical path and the minimum field of view on the optical path of the blue-glass lens element. Furthermore, the following condition can be satisfied: $Fb2 \leq 0.25$. Furthermore, the following condition can be satisfied: $Fb2 \leq 0.20$. Furthermore, the following condition can be satisfied: $0.10 \leq Fb2 \leq 0.18$. Furthermore, the following condition can be satisfied: $0.14 \leq Fb2 \leq 0.16$.

According to the optical lens assembly of the present disclosure, when a third arranging factor of the blue-glass lens element is Fb3, the following condition can be satisfied: $0.50 \leq Fb3 \leq 2.00$. By satisfying the third arranging factor of the blue-glass lens element, the overall optical paths in all fields of view and the thickness of the blue-glass lens element can be ensured to be similar, and it is favorable for enhancing the filtering effect of the near-infrared light of the blue-glass lens element in all fields of view. Furthermore, the following condition can be satisfied: $0.60 \leq Fb3 \leq 1.80$. Furthermore, the following condition can be satisfied: $0.70 \leq Fb3 \leq 1.50$. Furthermore, the following condition can be satisfied: $0.80 \leq Fb3 \leq 1.20$. Furthermore, the following condition can be satisfied: $0.90 \leq Fb3 \leq 1.10$. Furthermore, the following condition can be satisfied: $0.95 \leq Fb3 \leq 1.08$.

According to the optical lens assembly of the present disclosure, when a fourth arranging factor of the blue-glass lens element is Fb4, the following condition can be satisfied: $Fb4 \leq 0.10$. By limiting the fourth arranging factor of the blue-glass lens element, the difference among the optical paths in all fields of view can be ensured to be small, and it is favorable for reducing the filtering difference of the near-infrared light of the blue-glass lens element in all fields of view. Furthermore, the following condition can be satisfied: $Fb4 \leq 0.08$. Furthermore, the following condition can be satisfied: $0 < Fb4 \leq 0.06$. Furthermore, the following condition can be satisfied: $0.02 \leq Fb4 \leq 0.05$.

According to the optical lens assembly of the present disclosure, when a fifth arranging factor of the blue-glass lens element is Fb5, the following condition can be satisfied: $0.05 \leq Fb5 \leq 0.40$. By satisfying the fifth arranging factor of the blue-glass lens element, an appropriate amount of near-infrared light can be filtered out by the blue-glass lens element, and the best filtering effect of the near-infrared light can be achieved. Furthermore, the following condition can be satisfied: $0.08 \leq Fb5 \leq 0.30$. Furthermore, the following condition can be satisfied: $0.10 \leq Fb5 \leq 0.20$. Furthermore, the following condition can be satisfied: $0.12 \leq Fb5 \leq 0.18$. Furthermore, the following condition can be satisfied: $0.15 \leq Fb5 \leq 0.16$.

According to the optical lens assembly of the present disclosure, when an effective diameter arranging factor of the blue-glass lens element is FbY, the following condition can be satisfied: $FbY \leq 0.27$. By limiting the ratio between the maximum effective diameter of the blue-glass lens element and the maximum image height of the optical lens assembly, it is favorable for preventing the blue-glass lens element from excessively absorbing the band of the red light under the unit area thereof, and the imaging quality can be enhanced. Furthermore, the following condition can be satisfied: $FbY \leq 0.35$. Furthermore, the following condition can be satisfied: $FbY \leq 0.30$. Furthermore, the following condition can be satisfied: $0 \leq FbY \leq 0.26$. Furthermore, the following condition can be satisfied: $0.05 \leq FbY \leq 0.24$. Furthermore, the following condition can be satisfied: $0.10 \leq FbY \leq 0.22$. Furthermore, the following condition can be satisfied: $0.15 \leq FbY \leq 0.21$.

According to the optical lens assembly of the present disclosure, when a comprehensive arranging factor of the blue-glass lens element is FB, the following condition can be satisfied: $1.00 \leq FB$. By designing an appropriate comprehensive arranging factor of the blue-glass lens element, the arranging requirements of the blue glass on the optical paths in all fields of view of the optical lens element can be comprehensively considered, and it is favorable for optimizing the filtering effect of the near-infrared light. Furthermore, the following condition can be satisfied: $0 < FB$. Furthermore, the following condition can be satisfied: $0.50 \leq FB$. Furthermore, the following condition can be satisfied: $2.00 \leq FB \leq \infty$. Furthermore, the following condition can be satisfied: $2.50 \leq FB \leq 100.00$. Furthermore, the following condition can be satisfied: $3.00 \leq FB \leq 10.00$. Furthermore, the following condition can be satisfied: $4.00 \leq FB \leq 5.00$. Furthermore, the following condition can be satisfied: $4.05 \leq FB \leq 4.20$.

According to the optical lens assembly of the present disclosure, when a main arranging factor of the long-wavelength absorbing lens element is FA, the following condition can be satisfied: $1.50 \leq FA$. By designing an appropriate main arranging factor of the long-wavelength absorbing lens element, the difference among the optical paths in all fields of view can be ensured to be small, and it is favorable for reducing the filtering difference of the near-infrared light of the long-wavelength absorbing lens element in all fields of view. Furthermore, the following condition can be satisfied: $1.50 \leq FA \leq \infty$. Furthermore, the following condition can be satisfied: $1.80 \leq FA \leq 100.00$. Furthermore, the following condition can be satisfied: $2.00 \leq FA \leq 10.00$. Furthermore, the following condition can be satisfied: $2.20 \leq FA \leq 5.00$. Furthermore, the following condition can be satisfied: $2.40 \leq FA \leq 3.00$. Furthermore, the following condition can be satisfied: $2.50 \leq FA \leq 2.60$.

According to the optical lens assembly of the present disclosure, when a material arranging factor of the long-wavelength absorbing lens element is Fam, the following condition can be satisfied: $30.00 \leq Fam \leq 40.00$. By satisfying the material arranging factor of the long-wavelength absorbing lens element, the material of the optical lens element and the long-wavelength absorbing material can be evenly mixed with each other, and it is favorable for enhancing the uniformity of the long-wavelength absorbing lens element. Furthermore, the following condition can be satisfied: $20.00 \leq Fam \leq 50.00$. Furthermore, the following condition can be satisfied: $25.00 \leq Fam \leq 45.00$. Furthermore, the following condition can be satisfied: $35.00 \leq Fam \leq 38.00$.

According to the optical lens assembly of the present disclosure, when the central thickness along the optical axis of the blue-glass lens element is CTB, and the central thickness along the optical axis of the long-wavelength absorbing lens element is CTA, the following condition can be satisfied: $1.20 \leq CTB/CTA$. By satisfying the ratio of the thicknesses of the blue-glass lens element and the long-wavelength absorbing lens element, the best combination of the blue-glass lens element and the long-wavelength absorbing lens element can be obtained, and it is favorable for enhancing the overall filtering effect of the near-infrared light of the optical lens assembly. Furthermore, the following condition can be satisfied: $1.00 \leq CTB/CTA$. Furthermore, the following condition can be satisfied: $1.40 \leq CTB/CTA$. Furthermore, the following condition can be satisfied: $1.50 \leq CTB/CTA \leq 3.00$. Furthermore, the following condition can be satisfied: $1.60 \leq CTB/CTA \leq 2.50$. Furthermore, the following condition can be satisfied: $1.70 \leq CTB/CTA \leq 2.30$. Furthermore, the following condition can be satisfied: $1.90 \leq CTB/CTA \leq 2.10$.

According to the optical lens assembly of the present disclosure, the blue-glass lens element and the long-wavelength filtering lens element can be the same one of the optical lens elements. Because the blue-glass lens element is resistant to high temperatures, by arranging the blue-glass lens element and the long-wavelength filtering lens element as the same optical lens element, the deformation of the optical lens element caused by the long-wavelength filtering coating membrane can be reduced so as to reduce the influence to the imaging caused by the deformation of the optical lens element, and it is favorable for maintaining the good imaging quality of the optical lens assembly.

According to the optical lens assembly of the present disclosure, when a merge arranging factor of an object-side surface of the blue-glass lens element is FbcR1, the following condition can be satisfied: $6.00 \leq FbcR1$. By satisfying the merge arranging factor on the object-side surface of the blue-glass lens element, the best combination of the blue glass and the long-wavelength filtering coating membrane can be obtained, and it is favorable for enhancing the overall filtering effect of the near-infrared light of the optical lens assembly. Furthermore, the following condition can be satisfied: $10.00 \leq$ FbcR1 $\leq \infty$. Furthermore, the following condition can be satisfied: $20.00 \leq$ FbcR1 $\leq 200.00$. Furthermore, the following condition can be satisfied: $30.00 \leq$ FbcR1 $\leq 100.00$.

According to the optical lens assembly of the present disclosure, when a merge arranging factor of the blue-glass lens element image-side surface is FbcR2, the following condition can be satisfied: $6.00 \leq$ FbcR2. By satisfying the merge arranging factor on the image-side surface of the blue-glass lens element, the best combination of the blue glass and the long-wavelength filtering coating membrane can be obtained, and it is favorable for enhancing the overall filtering effect of the near-infrared light of the optical lens assembly. Furthermore, the following condition can be satisfied: $10.00 \leq$ FbcR2 $\leq \infty$. Furthermore, the following condition can be satisfied: $20.00 \leq$ FbcR2 $\leq 1000$. Furthermore, the following condition can be satisfied: $30.00 \leq$ FbcR2 $\leq 500.00$. Furthermore, the following condition can be satisfied: $40.00 \leq$ FbcR2 $\leq 200.00$. Furthermore, the following condition can be satisfied: $50.00 \leq$ FbcR2 $\leq 100.00$.

According to the optical lens assembly of the present disclosure, when a total focal length of the optical lens assembly is F, and a maximum field of view of the optical lens assembly is FOV, the following condition can be satisfied: $\tan(FOV/2) \times F \leq 4.0$. By satisfying the product value of the tangent value of a half of the maximum field of view of the optical lens assembly and the total focal length, the applicability of the blue-glass lens element in the optical lens assembly can be significantly enhanced, and it is favorable for achieving the ideal filtering effect of the near-infrared light of the blue-glass lens element. Furthermore, the following condition can be satisfied: $0 < \tan(FOV/2) \times F \leq 3.0$. Furthermore, the following condition can be satisfied: $1.00 \leq \tan(FOV/2) \times F \leq 2.50$. Furthermore, the following condition can be satisfied: $1.50 \leq \tan(FOV/2) \times F \leq 2.30$. Furthermore, the following condition can be satisfied: $1.80 \leq \tan(FOV/2) \times F \leq 2.20$. Furthermore, the following condition can be satisfied: $1.90 \leq \tan(FOV/2) \times F \leq 2.10$.

According to the optical lens assembly of the present disclosure, when a total number of layers of the long-wavelength filtering coating membrane is tLs, the following condition can be satisfied: $20 \leq$ tLs $\leq 60$. By combining the blue-glass lens element with the long-wavelength filtering coating membrane, the total number of layers of the filtering coating membrane can be reduced, and it is favorable for streamlining the production process. Furthermore, the following condition can be satisfied: tLs $\leq 80$. Furthermore, the following condition can be satisfied: $0 <$ tLs $\leq 70$. Furthermore, the following condition can be satisfied: $30 \leq$ tLs $\leq 50$.

According to the optical lens assembly of the present disclosure, when a total thickness of the long-wavelength filtering coating membrane is tTk, the following condition can be satisfied: $4500 \, \text{nm} \leq$ tTk $\leq 8000 \, \text{nm}$. By combining the blue-glass lens element with the long-wavelength filtering coating membrane, the thickness of the filtering coating membrane can be reduced, and by satisfying the thickness of the filtering coating membrane, it is favorable for reducing manufacturing costs. Furthermore, the following condition can be satisfied: $3000 \, \text{nm} \leq$ tTk $\leq 10000 \, \text{nm}$. Furthermore, the following condition can be satisfied: $4000 \, \text{nm} \leq$ tTk $\leq 9000 \, \text{nm}$. Furthermore, the following condition can be satisfied: $5000 \, \text{nm} \leq$ tTk $\leq 7000 \, \text{nm}$. Furthermore, the following condition can be satisfied: $5500 \, \text{nm} \leq$ tTk $\leq 6000 \, \text{nm}$.

According to the optical lens assembly of the present disclosure, when a total thickness of the high refractive index layer is HtTk, and a total thickness of the low refractive index layer is LtTk, the following condition can be satisfied: $1.30 \leq$ LtTk/HtTk $\leq 1.80$. By designing a specific ratio between the total thickness of the low refractive index layer and the total thickness of the high refractive index layer, the filtering ability to the near-infrared light of the long-wavelength filtering lens element can be enhanced, and it is favorable for enhancing the filtering effect of the near-infrared light of the optical lens assembly. Furthermore, the following condition can be satisfied: $1.00 \leq$ LtTk/HtTk $\leq 2.00$. Furthermore, the following condition can be satisfied: $1.20 \leq$ LtTk/HtTk $\leq 1.90$. Furthermore, the following condition can be satisfied: $1.50 \leq$ LtTk/HtTk $\leq 1.70$. Furthermore, the following condition can be satisfied: $1.55 \leq$ LtTk/HtTk $\leq 1.65$.

According to the optical lens assembly of the present disclosure, when a refractive index of the high refractive index layer is NH, and a refractive index of the low refractive index layer is NL, the following condition can be satisfied: $0.80 \leq$ NH-NL $\leq 1.50$. By designing the difference of the refractive index between the high refractive index layer and the low refractive index layer, the best filtering effect of the near-infrared light of the long-wavelength filtering lens element can be obtained. Furthermore, the following condition can be satisfied: $0.50 \leq$ NH-NL. Furthermore, the following condition can be satisfied: $0.60 \leq$ NH-NL. Furthermore, the following condition can be satisfied: $0.70 \leq$ NH-NL $\leq 2.00$. Furthermore, the following condition can be satisfied: $0.85 \leq$ NH-NL $\leq 1.00$.

According to the optical lens assembly of the present disclosure, when a wavelength at 50% transmittance of the optical lens assembly is Wt50, the following condition can be satisfied: $600 \, \text{nm} \leq$ Wt50 $\leq 650 \, \text{nm}$. By limiting the wavelength at the 50% transmittance of the optical lens assembly, the 50% transmittance can be limited within the range of the visible light. Thus, the filtering band of the optical lens assembly can be biased toward the visible light, and it is favorable for reducing the transmission of the near-infrared light. Furthermore, the following condition can be satisfied: $600 \, \text{nm} \leq$ Wt50 $\leq 700 \, \text{nm}$. Furthermore, the following condition can be satisfied: $600 \, \text{nm} \leq$ Wt50 $\leq 680 \, \text{nm}$. Furthermore, the following condition can be satisfied: $600 \, \text{nm} \leq$ Wt50 $\leq 660 \, \text{nm}$.

According to the optical lens assembly of the present disclosure, when an average transmittance in a wavelength range of 600 nm - 650 nm of the optical lens assembly is T6065, the following condition can be satisfied: T6065 $\leq 50.00\%$.

By limiting the transmittance in the wavelength range of 600 nm - 650 nm, a low transmittance of the long-wavelength red light can be ensured, so that the extra red light can be reduced so as to enhance the imaging quality. Furthermore, the following condition can be satisfied: T6065 ≤ 60.00%. Furthermore, the following condition can be satisfied: T6065 ≤ 55.00%. Furthermore, the following condition can be satisfied: T6065 ≤ 45.00%. Furthermore, the following condition can be satisfied: 0% ≤ T6065 ≤ 40.00%.

According to the optical lens assembly of the present disclosure, when an average transmittance in a wavelength range of 650 nm - 700 nm of the optical lens assembly is T6570, the following condition can be satisfied: T6570 ≤ 20.00%. By limiting the transmittance in the wavelength range of 650 nm - 700 nm, a low transmittance of the short-wavelength near-infrared light can be ensured, and it is favorable for reducing the imaging interference caused by the short-wavelength near-infrared light. Furthermore, the following condition can be satisfied: T6570 ≤ 30.00%. Furthermore, the following condition can be satisfied: T6570 ≤ 25.00%. Furthermore, the following condition can be satisfied: T6570 ≤ 15.00%. Furthermore, the following condition can be satisfied: 0% ≤ T6570 ≤ 13.00%.

According to the optical lens assembly of the present disclosure, when an average transmittance in a wavelength range of 700 nm - 1050 nm of the optical lens assembly is T70105, the following condition can be satisfied: T70105 ≤ 3.00%. By limiting the transmittance in the wavelength range of 700 nm - 1050 nm, a low transmittance of the near-infrared light within the detectable band of the image sensor can be ensured, and it is favorable for reducing the imaging interference caused by the near-infrared light within the detectable band. Furthermore, the following condition can be satisfied: T70105 ≤ 10.00%. Furthermore, the following condition can be satisfied: T70105 ≤ 5.00%. Furthermore, the following condition can be satisfied: T70105 ≤ 2.00%. Furthermore, the following condition can be satisfied: T70105 ≤ 1.00%. Furthermore, the following condition can be satisfied: 0% ≤ T70105 ≤ 0.50%.

According to the optical lens assembly of the present disclosure, when a transmittance at a wavelength of 850 nm of the optical lens assembly is T85, the following condition can be satisfied: T85 ≤ 2.50%. By limiting the transmittance at the wavelength of 850 nm, it is favorable for preventing the optical imaging from affecting by the products that emit the near-infrared light of 850 nm in daily life. Furthermore, the following condition can be satisfied: T85 ≤ 10.00%. Furthermore, the following condition can be satisfied: T85 ≤ 5.00%. Furthermore, the following condition can be satisfied: T85 ≤ 1.00%. Furthermore, the following condition can be satisfied: T85 ≤ 0.50%. Furthermore, the following condition can be satisfied: 0% ≤ T85 ≤ 0.30%.

According to the optical lens assembly of the present disclosure, when a transmittance at a wavelength of 940 nm of the optical lens assembly is T94, the following condition can be satisfied: T94 ≤ 2.50%. By limiting the transmittance at the wavelength of 940 nm, it is favorable for preventing the optical imaging from affecting by the products that emit the near-infrared light of 940 nm in daily life. Furthermore, the following condition can be satisfied: T94 ≤ 10.00%. Furthermore, the following condition can be satisfied: T94 ≤ 5.00%. Furthermore, the following condition can be satisfied: T94 ≤ 1.00%. Furthermore, the following condition can be satisfied: T94 ≤ 0.50%. Furthermore, the following condition can be satisfied: 0% ≤ T94 ≤ 0.30%.

According to the optical lens assembly of the present disclosure, when a transmittance at a wavelength of 1050 nm of the optical lens assembly is T105, the following condition can be satisfied: T105 ≤ 2.50%. By limiting the transmittance at the wavelength of 1050 nm, it is favorable for preventing the optical imaging from affecting by the products that emit the near-infrared light of 1050 nm in daily life. Furthermore, the following condition can be satisfied: T105 ≤ 10.00%. Furthermore, the following condition can be satisfied: T105 ≤ 5.00%. Furthermore, the following condition can be satisfied: T105 ≤ 1.00%. Furthermore, the following condition can be satisfied: T105 ≤ 0.50%. Furthermore, the following condition can be satisfied: 0% ≤ T105 ≤ 0.30%.

The optical lens assembly of the present disclosure can include an optical lens element, a cover glass, a blue glass, a micro lens, a filter, a color filter and other optical elements with the visible light penetration characteristics.

According to the object side and the image side of the optical lens assembly of the present disclosure, the image side is the side close to the image sensor along the optical axis, and the object side is the side away from to the image sensor along the optical axis.

The optical lens element of the optical lens assembly of the present disclosure can include at least one optical lens element, at least two optical lens elements, at least three optical lens elements, at least four optical lens elements, at least five optical lens elements, at least six optical lens elements, at least seven optical lens elements, at least eight optical lens elements, at least nine optical lens elements and at least ten optical lens elements; and the object side to the image side of the optical lens assembly can be the first optical lens element, the second optical lens element, the second optical lens element, the third optical lens element, the fourth optical lens element, the fifth optical lens element, the sixth optical lens element, the seventh optical lens element, the eighth optical lens element, the ninth optical lens element, the tenth optical lens element, and so on. The optical lens elements can include a blue-glass lens element, a long-wavelength absorbing lens element and a long-wavelength filtering lens element. The optical lens assembly can include a single piece or multiple pieces of the blue-glass lens element, the long-wavelength absorbing lens element or the long-wavelength filtering lens element. For example, the optical lens assembly can include at least one blue-glass lens element, the optical lens assembly can include at least two blue-glass lens elements, the optical lens assembly can include at least three blue-glass lens elements, the optical lens assembly can include at least four blue-glass lens elements, and the optical lens assembly can include at least five blue-glass lens elements; the optical lens assembly can include at least one long-wavelength absorbing lens element, the optical lens assembly can include at least two long-wavelength absorbing lens elements, the optical lens assembly can include at least three long-wavelength absorbing lens elements, the optical lens assembly can include at least four long-wavelength absorbing lens elements, and the optical lens assembly can include at least five long-wavelength absorbing lens elements; and the optical lens assembly can include at least one long-wavelength filtering lens element, the optical lens assembly can include at least two long-wavelength filtering lens elements, the optical lens assembly can include at least three long-wavelength filtering lens elements, the optical lens assembly can include at least four long-wavelength filtering lens elements, and the optical lens assembly can include at least five long-wavelength filtering lens elements.

The optical lens element of the present disclosure has an object-side surface and an image-side surface, the surface shape of the object-side surface of the optical lens element can be spherical or aspherical, and the surface shape of the image-side surface of the optical lens element can be spherical or aspherical.

The material of the optical lens element of the present disclosure can be a plastic or a glass, the blue glass material can be added to the glass lens element so as to form the blue-glass lens element, or the long-wavelength absorbing material can be added to the plastic lens element so as to form the long-wavelength absorbing lens element. When the material of the optical lens element is the plastic, the optical lens element can include poly(methyl methacrylate) (PMMA), polystyrene (PS), polycarbonate (PC), cyclo olefin polymer (COP), cyclic olefin copolymer (COC), polyetherimide (PEI) and polyester resin (OKP-4 or OKP-4HT).

The optical path of the optical lens element of the present disclosure means the straight-line distance between the incident point and the exit point of the chief ray (R1 ray) in the field of view of the optical lens element, and the fields of view used to calculate the optical path are obtained by dividing 0.0 F (0.0 Field) to 1.0 F (1.0 Field) into 50 equal parts to get 51 fields of view namely 0 F, 0.02 F, 0.04 F, 0.06 F, 0.08 F, 0.10 F, 0.12 F, 0.14 F, 0.16 F, 0.18 F, 0.20 F, 0.22 F, 0.24 F, 0.26 F, 0.28 F, 0.30 F, 0.32 F, 0.34 F, 0.36 F, 0.38 F, 0.40 F, 0.42 F, 0.44 F, 0.46 F, 0.48 F, 0.50 F, 0.52 F, 0.54 F, 0.56 F, 0.58 F, 0.60 F, 0.62 F, 0.64 F, 0.66 F, 0.68 F, 0.70 F, 0.72 F, 0.74 F, 0.76 F, 0.78 F, 0.80 F, 0.82 F, 0.84 F, 0.86 F, 0.88 F, 0.90 F, 0.92 F, 0.94 F, 0.96 F, 0.98 F and 1.0 F. The five of the evenly divided fields of view refer to 0.0 F, 0.2 F, 0.4 F, 0.6 F, 0.8 F and 1.0 F, and the optical paths of the chief ray on the optical lens element on the five of the evenly divided fields of view are the optical paths of the chief ray of the optical lens element on the five of the evenly divided fields of view. When the Fb6 satisfies the specific condition, it means that the single optical lens element satisfies the specific condition of CPB/CP0 on the five of the fields of view namely 0.2 F, 0.4 F, 0.6 F, 0.8 F and 1.0 F.

The blue-glass lens element of the optical lens assembly of the present disclosure means the optical lens element that has the material thereof including the blue glass material. The blue glass material can mainly absorb the light with a wavelength of more than 600 nm. The blue-glass lens element can be the first optical lens element, the second optical lens element, the third optical lens element, the fourth optical lens element, the fifth optical lens element, the sixth optical lens element, the seventh optical lens element, the eighth optical lens element, the ninth optical lens element and the tenth optical lens element of the optical lens assembly. The ingredients of the blue glass material can include phosphorus ions ($P^{5+}$ or $P^{3+}$), aluminum ion ($Al^{3+}$), antimony ions ($Sb^{5+}$ or $Sb^{3+}$), copper ion ($Cu^{2+}$), magnesium ion ($Mg^{2+}$), calcium ion ($Ca^{2+}$), strontium ion ($Sr^{2+}$), barium ion ($Ba^{2+}$), zinc ion ($Zn^{2+}$), lithium ion ($Li^+$), sodium ion ($Na^+$), potassium ion ($K^+$), phosphorus radical ($PO_4^{3-}$), fluorine ion ($F^-$), etc. Or, the ingredients of the blue glass material can include inorganic compounds including the aforementioned ions.

The long-wavelength absorbing lens element of the optical lens assembly of the present disclosure means the optical lens element that has the material thereof including the long-wavelength absorbing material. The long-wavelength absorbing material is the organic compound that can mainly absorb the light with a wavelength of more than 600 nm. The long-wavelength absorbing lens element can be the first optical lens element, the second optical lens element, the third optical lens element, the fourth optical lens element, the fifth optical lens element, the sixth optical lens element, the seventh optical lens element, the eighth optical lens element, the ninth optical lens element and the tenth optical lens element of the optical lens assembly.

The long-wavelength filtering lens element of the optical lens assembly of the present disclosure means the optical lens element including the long-wavelength filtering coating membrane disposed on the object-side surface or the image-side surface thereof. The long-wavelength filtering coating membrane can mainly reduce the transmittance of the light with a wavelength of more than 600 nm. The long-wavelength filtering lens element can be the first optical lens element, the second optical lens element, the third optical lens element, the fourth optical lens element, the fifth optical lens element, the sixth optical lens element, the seventh optical lens element, the eighth optical lens element, the ninth optical lens element and the tenth optical lens element of the optical lens assembly.

The long-wavelength filtering coating membrane of the present disclosure can be disposed on at least one surface of the object-side surface and the image-side surface of any one of the optical lens elements of the optical lens assembly. The long-wavelength filtering coating membrane is actually disposed on the object-side surface and the image-side surface of the first optical lens element, the object-side surface and the image-side surface of the second optical lens element, the object-side surface and the image-side surface of the third optical lens element, the object-side surface and the image-side surface of the fourth optical lens element, the object-side surface and the image-side surface of the fifth optical lens element, the object-side surface and the image-side surface of the sixth optical lens element, the object-side surface and the image-side surface of the seventh optical lens element, the object-side surface and the image-side surface of the eighth optical lens element, the object-side surface and the image-side surface of the ninth optical lens element, and the object-side surface and the image-side surface of the tenth optical lens element. The long-wavelength filtering coating membrane can be further disposed on the object-side surface or the image-side surface of the blue-glass lens element, so that the long-wavelength filtering lens element and the blue-glass lens element can be the same optical lens element. The long-wavelength filtering coating membrane can be further disposed on the object-side surface or the image-side surface of the long-wavelength absorbing lens element, so that the long-wavelength filtering lens element and the long-wavelength absorbing lens element can be the same optical lens element. The long-wavelength filtering coating membrane can be simultaneously disposed on the object-side surface and the image-side surface of one optical lens element, the long-wavelength filtering coating membrane also can be simultaneously disposed on the object-side surface and the image-side surface of different optical lens elements, and the number of layers and the thickness thereof on the object-side surface and the image-side surface can be exchanged. The optical lens element including the long-wavelength filtering coating membrane disposed on different sides can have less deformation compared to the optical lens element including the long-wavelength filtering coating membrane disposed on the same side. For example, the long-wavelength filtering coating membrane can be disposed on the image-side surface of the first optical lens element and the object-side surface of the second optical lens element, the long-wavelength filtering coating membrane can be disposed on the object-side surface of the second optical lens element and the image-side surface of the second optical lens element, or the long-wavelength filtering coating membrane can be disposed on the object-side surface of the third optical lens element and the image-side surface of the fourth optical lens element. The number of the optical lens element including the long-wavelength filtering coating membrane can be one, two, three, four, five, six, seven, eight, nine or ten. The long-wavelength filtering coating membrane disposed on the object-side surface and the image-side surface of the optical lens element means the long-wavelength filtering coating membrane is directly or indirectly disposed on the object-side surface and the image-side surface of the optical lens element, wherein the indirect disposition means that there are other kinds of coating membranes (such as anti-reflecting membranes) or other arrangements (such as coating layers or other materials) between the long-wavelength filtering coating membrane and the surface of the optical lens element. The arranging position of the long-wavelength filtering coating membrane also can be the object-side surface and the image-side surface of other optical elements, and the optical elements that can be arranged therewith are the flat glass, the protective glass, the plastic plate, the glass plate, the reflective element, etc. The filtering coating membrane disposed on other elements can enhance the complete filtering effect of the insufficient wavelength bands, so that the coating membrane formed on the surface of the optical lens element can be used to filter the light with a specific wavelength band so as to reduce the number of layers and the thickness.

The long-wavelength filtering coating membrane of the present disclosure includes at least one membrane layer. The first membrane layer of the long-wavelength filtering coating membrane can be located on the side close to the surface of the optical lens element, or the first membrane layer of the long-wavelength filtering coating membrane can be located on the side away from the surface of the optical lens element. The long-wavelength filtering coating membrane is formed by alternately stacking the high refractive index layers and the low refractive index layers. The high refractive index layer means that the membrane layer has a refractive index higher than that of the previous membrane layer, the low refractive index layer means that the membrane layer has a refractive index lower than that of the previous membrane layer, and the first membrane layer is defined as a high refractive index layer or a low refractive index layer based on the second membrane layer as a comparing standard. For example, if the refractive index of the first membrane layer is larger than that of the second membrane layer, the first membrane layer is a high refractive index layer; and if the refractive index of the first membrane layer is smaller than that of the second membrane layer, the first membrane layer is a low refractive index layer. The total number of layers of the long-wavelength filtering coating membrane can be the sum of the membrane layers of the long-wavelength filtering coating membranes on the object-side surface and the image-side surface of each of the optical lens elements. The total thickness of the long-wavelength filtering coating membrane can be the sum of the thicknesses of the long-wavelength filtering coating membranes on the object-side surface and the image-side surface of each of the optical lens elements. The long-wavelength filtering coating membrane can be disposed on the object-side surface and the image-side surface of different optical lens elements, so the total number of layers and the total thickness of the long-wavelength filtering coating membrane should be calculated for all of the membrane layers that substantially have the filtering effects of the long-wavelength light of all of the optical lens elements. The material of the membrane layer (Wavelength = 587.6 nm) can include magnesium fluoride ($MgF_2$, 1.3777), silicon dioxide ($SiO_2$, 1.4585), thorium fluoride ($ThF_4$, 1.5125), silicon monoxide (SiO, 1.55), cerium fluoride (CeFs, 1.63), aluminum oxide ($Al_2O_3$, 1.7682), yttrium oxide ($Y_2O_3$, 1.79), hafnium dioxide ($HfO_2$, 1.8935), zinc oxide (ZnO, 1.9269), scandium oxide ($Sc_2O_3$, 1.9872), aluminum nitride (AlN, 2.0294), silicon nitride ($Si_3N_4$, 2.0381), tantalum pentoxide ($Ta_2O_5$, 2.1306), zirconium dioxide ($ZrO_2$, 2.1588), zinc sulfide (ZnS, 2.2719), niobium pentoxide ($Nb_2O_5$, 2.3403), titanium dioxide ($TiO_2$, 2.6142) and titanium nitride (TiN, 3.1307). Or, the material of the membrane layer can be an $MgF_2$-$SiO_2$ mixture (the content ratio is $[SiO_2] > [MgF_2]$).

The manufacturing technology of the long-wavelength filtering coating membrane of the present disclosure can be a liquid phase coating method or a vapor phase coating method. The liquid phase coating method can be the acid etching method, the solution deposition method, the electroplating method, the anodizing method, the sol-gel method, Langmuir-Blodgett (LB) film or liquid phase epitaxy, etc. The vapor phase coating method can be the chemical vapor coating method or the physical vapor coating method. Furthermore, if the curvature of the coated lens element has a greater change, the atomic layer deposition (ALD) should be used so as to achieve the best uniformity of the membrane, so that the integral efficacy of the long-wavelength filtering coating membrane can be ensured.

In the arranging position of the anti-reflective coating membrane of the present disclosure, the anti-reflective coating membrane can be disposed on the object-side surface or the image-side surface of the optical lens element. Therefore, an excellent anti-reflection effect can be obtained, the serious reflection problems in the peripheral region of the optical lens element caused by the large angle of light incident on the surface thereof can be reduced, and thus the light transmittance of the optical lens assembly can be improved effectively so as to achieve the best anti-reflection effect.

In the membrane composition of the anti-reflective coating membrane of the present disclosure, the anti-reflective coating membrane can include at least one membrane layer, wherein the anti-reflective coating membrane can be formed by alternately stacking high refractive index layers and low refractive index layers, formed by subwavelength structures, formed by the combination of the high refractive index layers and the subwavelength structures, formed by the combination of the low refractive index layers and the subwavelength structures, or formed by the combination of the high refractive index layers, the low refractive index layers and the subwavelength structures. The anti-reflective coating membrane can include a long-wavelength filtering coating membrane on the inside (adjacent to the substrate). The anti-reflective coating membrane can include the subwavelength structures disposed on the outer side (adjacent to the air), and the material of the subwavelength structures can be a metal oxide such as aluminum oxide ($Al_2O_3$). The subwavelength structures of the anti-reflective coating membrane can include a plurality of holes, and the sizes of the holes adjacent to the outside of the anti-reflective coating membrane are larger than that of the holes adjacent to the inside of the anti-reflective coating membrane.

The best coating surface shape of the optical lens element of the present disclosure is determined based on the horizontal displacement of the optical lens element at the position of the maximum effective diameter, the thickness along the optical axis of the optical lens element and the radius of curvature at the optical axis of the optical lens element so as to divide 0.0 F (0.0 Field) to 1.0 F (1.0 Field) into 50 equal parts to get 51 fields of view namely 0.0 **F**, 0.02 **F**, 0.04 **F**, 0.06 **F**, 0.08 **F**, 0.10 **F**, 0.12 **F**, 0.14 **F**, 0.16 **F**, 0.18 **F**, 0.20 **F**, 0.22 **F**, 0.24 **F**, 0.26 F, 0.28 F, 0.30 F, 0.32 F, 0.34 F, 0.36 F, 0.38 F, 0.40 F, 0.42 F, 0.44 F, 0.46 F, 0.48 F, 0.50 F, 0.52 F, 0.54 F, 0.56 F, 0.58 F, 0.60 F, 0.62 F, 0.64 F, 0.66 F, 0.68 F, 0.70 F, 0.72 F, 0.74 F, 0.76 F, 0.78 F, 0.80 F, 0.82 F, 0.84 F, 0.86 F, 0.88 F, 0.90 F, 0.92 F, 0.94 F, 0.96 F, 0.98 F and 1.0 F, and the highest point of the light passing through all of the 51 fields of view is the maximum of the effective diameter. The direction of the horizontal displacement means the direction that the optical axis passes through the optical lens element. The horizontal displacement at the position of the maximum effective diameter is a horizontal displacement from the center of the optical lens element to the position of the maximum effective diameter. The radius of curvature of the optical lens element is calculated based on the target point of the optical lens element and two points that are 1E-10 mm upper and lower away from the target point in the direction perpendicular to the optical axis.

The transmittance of the optical lens assembly of the present disclosure means the transmittance at the incident angle of 0 degrees, and the transmittance and the average transmittance are calculated based on 5 nm as an interval. The wavelength at 50% transmittance of the optical lens assembly means the wavelength at 50% transmittance at which the transmittance decreases along with the increase of the wavelength.

In the compensating technology of the optical lens element of the present disclosure, when the material of the optical lens element is the plastic material, the surface shape change error thereof will be too large due to high temperature, especially when the thickness of the optical lens element is too small. When the number of layers is larger, the precision of the surface shape is affected by the temperature more obviously. Thus, by the lens compensating technology, the problem of temperature effect while coating on the plastic surface can be effectively solved, so that it is favorable for maintaining the integrity of the coating on the optical lens element and the high precision of the plastic lens element, and it is the key technology for achieving the high quality of the optical lens assembly. The lens compensating technology can be the moldflow analysis method, the curve fitting method or the wavefront error method, but the present disclosure is not limited thereto. The moldflow analysis method is to find the three-dimensional contour nodes of the lens surface shrinking in the Z-axis through mold flow analysis, and then the three-dimensional contour nodes are converted into an aspherical curve so as to compare with the original curve to find the difference there between. At the same time, the material shrinkage rate and the surface deformation trend are considered so as to calculate and obtain the compensation value. The curve fitting method is to measure the surface contour error of the element, then the curve fitting is performed based on a function, and then an optimization algorithm method is used to approximate the fitted curve to the measurement point so as to obtain the compensation value. The function can be exponential or polynomial, and the algorithm method can be the Gauss Newton method, the simplex algorithm method, the steepest descent method, etc. The wavefront error method is to measure the

# EP 4 664 163 A1

wavefront error (imaging error) data by the interferometer, the wavefront error generated by the manufacturing and the assembly is comprehensively analyzed by the original design value of the wavefront error and then is optimized by an optical software so as to obtain the compensation value.

The cover glass of the optical lens assembly of the present disclosure can be disposed on the object side of the image sensor, and the anti-reflective coating membrane can be formed on at least one or both of the object-side surface and the image-side surface of the cover glass. There can be or be without an air layer between the cover glass and the image sensor. When the optical lens assembly of the present disclosure is designed as an optical system with the air layer between the cover glass and the image sensor, the anti-reflective coating membrane can be manufactured on at least one or both of the object-side surface and the image-side surface of the cover glass. When the optical lens assembly of the present disclosure is designed as an optical system without the air layer between the cover glass and the image sensor, the anti-reflective coating membrane can be manufactured on the object-side surface of the cover glass. At least one or both of the object-side surface and the image-side surface of the cover glass can include the long-wavelength absorbing material. By the arrangement that the long-wavelength absorbing material is mixed with the polymer with high molecular weight, the polymer with high molecular weight can be disposed on the surface of the cover glass. Further, when the optical lens assembly of the present disclosure is designed as an optical system with the air layer between the cover glass and the image sensor, at least one or both of the object-side surface and the image-side surface of the cover glass can be designed to include the long-wavelength absorbing material membrane layer. When the optical lens assembly of the present disclosure is designed as an optical system without the air layer between the cover glass and the image sensor, the object-side surface of the cover glass can be designed to include the long-wavelength absorbing material membrane layer. Further, the material of the cover glass can be further designed to include the long-wavelength absorbing material.

The micro lens of the optical lens assembly of the present disclosure can be disposed on the object side of the image sensor, and the object-side surface and the image-side surface of the micro lens can include the long-wavelength absorbing material. By the long-wavelength absorbing material is mixed with the polymer with high molecular weight, the polymer with high molecular weight can be disposed on the surface of the micro lens, the polymer with high molecular weight can be disposed between the micro lens and the color filter as a connecting layer, or the long-wavelength absorbing material can be mixed in the color filter, the long-wavelength absorbing material can be disposed in the red filter, the green filter and the blue filter.

In the application of the optical lens assembly of the present disclosure, the optical element of the optical lens assembly can be disposed on a surface of the image sensor. By the arrangement that the long-wavelength filtering coating membrane is arranged on the surface of the optical lens element, it is favorable for reducing the angle at which the chief ray on the field of view at the maximum image height is incident on the image sensor in the optical lens assembly, so that the back focus length and total length can be reduced. In order to make the refractive index of the optical element and the refractive index of the surface of the image sensor close to each other or the same, a polymer with high molecular weight can be disposed between the optical element and the image sensor. Thus, the light can pass directly through the interface between the cover glass and the image sensor without refraction, and the angle of incidence becoming larger caused by the re-refraction can be avoided.

Each of the aforementioned features of the optical lens assembly of the present disclosure can be utilized in numerous combinations, so as to achieve the corresponding functionality.

According to further another embodiment of the present disclosure, an electronic device includes the aforementioned optical lens assembly.

The electronic device of the present disclosure can be a camera, a video camera, a video lens assembly, a cell phone, a tablet, a laptop, a handheld game console, a home game console, a car device, a vehicle device, an AR glasses, a VR glasses, an AR head-mounted display, a VR head-mounted display, etc.

[Comparative example 1]

The optical lens assembly of Comparative example 1 includes at least three optical lens elements, and the at least three optical lens elements include, in order from an object side to an image side of the optical lens assembly, a first optical lens element, a second optical lens element and a third optical lens element.

The optical lens assembly of Comparative example 1 does not include the blue glass plate, the long-wavelength filtering plate, the blue-glass lens element, the long-wavelength absorbing lens element or the long-wavelength filtering lens element that are used to filter out the light.

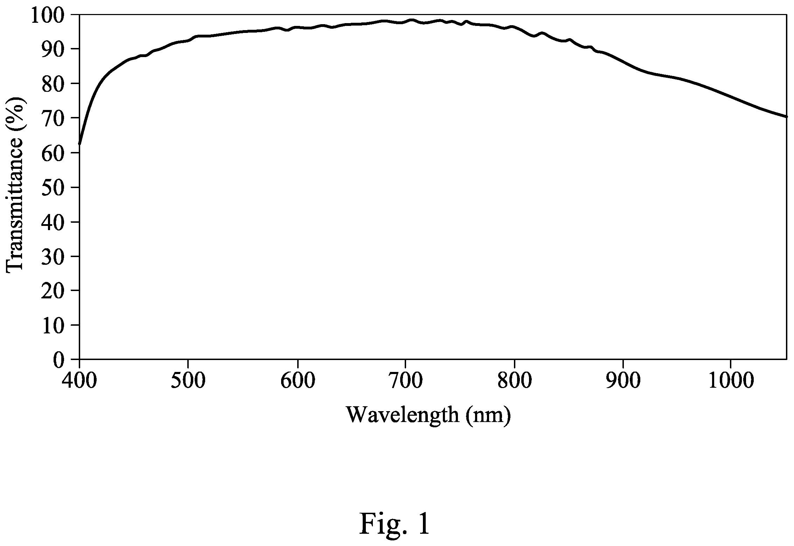

Fig. 1 is a relationship diagram between transmittances and wavelengths of an optical lens assembly according to Comparative example 1, and Table 1A shows the values of transmittance in a wavelength range of 400 nm to 1050 nm of the optical lens assembly of Comparative example 1.

| Table 1A | |
|---|---|
| Wavelength (nm) | Transmittance (%) |
| 400 | 62.61 |
| 405 | 68.93 |
| 410 | 73.84 |
| 415 | 77.61 |
| 420 | 80.45 |
| 425 | 82.40 |
| 430 | 83.51 |
| 435 | 84.92 |
| 440 | 85.63 |
| 445 | 86.73 |
| 450 | 87.19 |
| 455 | 88.03 |
| 460 | 88.21 |
| 465 | 89.10 |
| 470 | 89.78 |
| 475 | 90.13 |
| 480 | 90.94 |
| 485 | 91.55 |
| 490 | 91.81 |
| 495 | 92.31 |
| 500 | 92.60 |
| 505 | 93.38 |
| 510 | 93.47 |
| 515 | 93.80 |
| 520 | 93.75 |
| 525 | 94.12 |
| 530 | 94.24 |
| 535 | 94.55 |
| 540 | 94.70 |
| 545 | 95.09 |
| 550 | 94.99 |
| 555 | 95.28 |
| 560 | 95.20 |
| 565 | 95.52 |
| 570 | 95.58 |
| 575 | 95.43 |
| 580 | 95.66 |
| 585 | 95.90 |
| 590 | 95.62 |

(continued)

| Table 1A | |
| --- | --- |
| Wavelength (nm) | Transmittance (%) |
| 595 | 96.20 |
| 600 | 96.38 |
| 605 | 96.29 |
| 610 | 96.29 |
| 615 | 96.34 |
| 620 | 96.76 |
| 625 | 96.76 |
| 630 | 96.54 |
| 635 | 96.87 |
| 640 | 97.03 |
| 645 | 97.13 |
| 650 | 97.27 |
| 655 | 97.37 |
| 660 | 97.42 |
| 665 | 97.47 |
| 670 | 97.71 |
| 675 | 97.92 |
| 680 | 97.84 |
| 685 | 98.02 |
| 690 | 98.03 |
| 695 | 97.99 |
| 700 | 98.07 |
| 705 | 98.37 |
| 710 | 98.12 |
| 715 | 98.17 |
| 720 | 98.23 |
| 725 | 98.28 |
| 730 | 98.27 |
| 735 | 97.96 |
| 740 | 98.08 |
| 745 | 97.92 |
| 750 | 97.36 |
| 755 | 98.03 |
| 760 | 97.64 |
| 765 | 97.64 |
| 770 | 97.23 |
| 775 | 97.19 |
| 780 | 96.98 |

(continued)

| Table 1A | |
| --- | --- |
| Wavelength (nm) | Transmittance (%) |
| 785 | 96.61 |
| 790 | 96.56 |
| 795 | 96.36 |
| 800 | 96.37 |
| 805 | 95.60 |
| 810 | 95.11 |
| 815 | 94.49 |
| 820 | 93.98 |
| 825 | 94.49 |
| 830 | 93.96 |
| 835 | 93.51 |
| 840 | 92.78 |
| 845 | 92.41 |
| 850 | 92.72 |
| 855 | 92.06 |
| 860 | 91.30 |
| 865 | 90.72 |
| 870 | 90.62 |
| 875 | 89.58 |
| 880 | 89.22 |
| 885 | 88.59 |
| 890 | 87.80 |
| 895 | 86.99 |
| 900 | 86.12 |
| 905 | 85.31 |
| 910 | 84.64 |
| 915 | 84.13 |
| 920 | 83.44 |
| 925 | 82.95 |
| 930 | 82.77 |
| 935 | 82.48 |
| 940 | 82.11 |
| 945 | 81.96 |
| 950 | 81.46 |
| 955 | 81.09 |
| 960 | 80.57 |
| 965 | 80.08 |
| 970 | 79.83 |

(continued)

| Table 1A | |
|---|---|
| Wavelength (nm) | Transmittance (%) |
| 975 | 79.26 |
| 980 | 78.44 |
| 985 | 77.90 |
| 990 | 77.32 |
| 995 | 76.82 |
| 1000 | 76.12 |
| 1005 | 75.51 |
| 1010 | 74.90 |
| 1015 | 74.33 |
| 1020 | 73.53 |
| 1025 | 73.00 |
| 1030 | 72.38 |
| 1035 | 71.80 |
| 1040 | 71.35 |
| 1045 | 70.71 |
| 1050 | 70.43 |

Table 1B shows the values of parameters of the optical lens assembly of Comparative example 1, wherein Wt50 is a wavelength at 50% transmittance of the optical lens assembly, T6065 is an average transmittance in a wavelength range of 600 nm - 650 nm of the optical lens assembly, T6570 is an average transmittance in a wavelength range of 650 nm - 700 nm of the optical lens assembly, T70105 is an average transmittance in a wavelength range of 700 nm - 1050 nm of the optical lens assembly, T85 is a transmittance at a wavelength of 850 nm of the optical lens assembly, T94 is a transmittance at a wavelength of 940 nm of the optical lens assembly, and T105 is a transmittance at a wavelength of 1050 nm of the optical lens assembly.

| Table 1B | | | |
|---|---|---|---|
| Wt50 (nm) | - | T85 (%) | 92.72 |
| T6065 (%) | 96.70 | T94 (%) | 82.11 |
| T6570 (%) | 97.74 | T1 05 (%) | 70.43 |
| T70105 (%) | 87.72 | | |

If the definitions of parameters shown in tables of the following comparative example and examples are the same as those shown in Table 1B, those will not be described again.

[Comparative example 2]

The optical lens assembly of Comparative example 2 includes at least three optical lens elements, and the at least three optical lens elements include, in order from an object side to an image side of the optical lens assembly, a first optical lens element, a second optical lens element and a third optical lens element.

The optical lens assembly of Comparative example 2 includes a blue glass plate and a long-wavelength filtering plate but does not include the blue-glass lens element, the long-wavelength absorbing lens element or the long-wavelength filtering lens element.

[Example 1]

The optical lens assembly of Example 1 includes at least three optical lens elements, the at least three optical lens elements include, in order from an object side to an image side of the optical lens assembly, a first optical lens element, a second optical lens element and a third optical lens element, and the optical lens assembly of Example 1 includes a blue-glass lens element and a long-wavelength absorbing lens element.

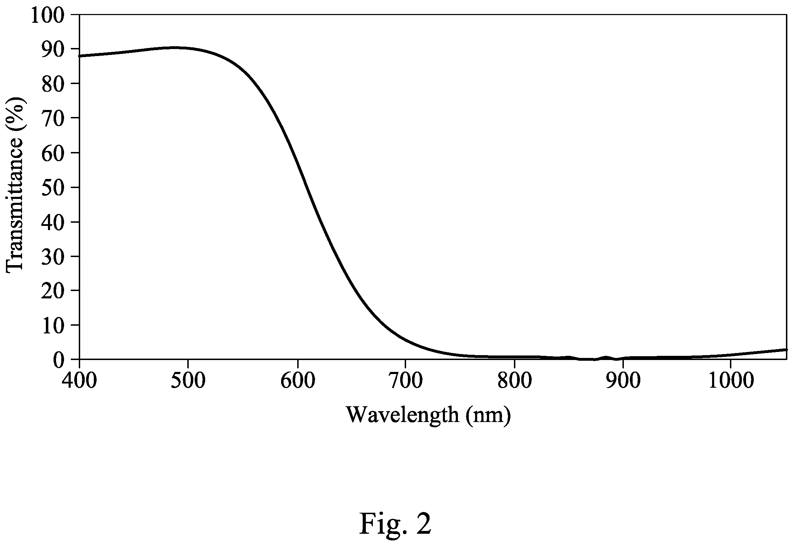

Fig. 2 is a relationship diagram between transmittances and wavelengths of an optical lens assembly according to Example 1, and Table 2A shows the values of transmittance in a wavelength range of 400 nm to 1050 nm of the optical lens assembly of Example 1.

| Table 2A | |
|---|---|
| Wavelength (nm) | Transmittance (%) |
| 400 | 88.08 |
| 405 | 88.54 |
| 410 | 88.48 |
| 415 | 88.54 |
| 420 | 88.73 |
| 425 | 89.18 |
| 430 | 89.32 |
| 435 | 89.13 |
| 440 | 89.18 |
| 445 | 89.29 |
| 450 | 89.73 |
| 455 | 89.88 |
| 460 | 89.49 |
| 465 | 89.80 |
| 470 | 89.78 |
| 475 | 89.61 |
| 480 | 89.79 |
| 485 | 90.01 |
| 490 | 89.82 |
| 495 | 90.03 |
| 500 | 89.95 |
| 505 | 89.77 |
| 510 | 89.62 |
| 515 | 89.23 |
| 520 | 88.79 |
| 525 | 88.47 |
| 530 | 87.69 |
| 535 | 86.97 |
| 540 | 85.93 |
| 545 | 84.69 |
| 550 | 83.40 |
| 555 | 81.50 |

(continued)

| Table 2A | |
|---|---|
| Wavelength (nm) | Transmittance (%) |
| 560 | 79.56 |
| 565 | 77.36 |
| 570 | 74.76 |
| 575 | 72.04 |
| 580 | 69.00 |
| 585 | 65.81 |
| 590 | 62.30 |
| 595 | 58.77 |
| 600 | 55.16 |
| 605 | 51.51 |
| 610 | 47.56 |
| 615 | 43.85 |
| 620 | 40.10 |
| 625 | 36.53 |
| 630 | 32.97 |
| 635 | 29.61 |
| 640 | 26.46 |
| 645 | 23.52 |
| 650 | 20.77 |
| 655 | 18.21 |
| 660 | 15.88 |
| 665 | 13.92 |
| 670 | 12.19 |
| 675 | 10.62 |
| 680 | 9.19 |
| 685 | 7.90 |
| 690 | 6.85 |
| 695 | 5.90 |
| 700 | 5.09 |
| 705 | 4.42 |
| 710 | 3.84 |
| 715 | 3.29 |
| 720 | 2.86 |
| 725 | 2.50 |
| 730 | 2.21 |
| 735 | 1.93 |
| 740 | 1.69 |
| 745 | 1.51 |

(continued)

| Table 2A | |
|---|---|
| Wavelength (nm) | Transmittance (%) |
| 750 | 1.35 |
| 755 | 1.21 |
| 760 | 1.08 |
| 765 | 0.99 |
| 770 | 0.90 |
| 775 | 0.83 |
| 780 | 0.78 |
| 785 | 0.71 |
| 790 | 0.68 |
| 795 | 0.62 |
| 800 | 0.63 |
| 805 | 0.56 |
| 810 | 0.59 |
| 815 | 0.54 |
| 820 | 0.54 |
| 825 | 0.52 |
| 830 | 0.49 |
| 835 | 0.52 |
| 840 | 0.52 |
| 845 | 0.64 |
| 850 | 0.00 |
| 855 | 0.00 |
| 860 | 0.01 |
| 865 | 0.47 |
| 870 | 0.00 |
| 875 | 0.12 |
| 880 | 0.36 |
| 885 | 0.00 |
| 890 | 0.18 |
| 895 | 0.20 |
| 900 | 0.32 |
| 905 | 0.25 |
| 910 | 0.27 |
| 915 | 0.34 |
| 920 | 0.34 |
| 925 | 0.44 |
| 930 | 0.43 |
| 935 | 0.52 |

(continued)

| Table 2A | |
|---|---|
| Wavelength (nm) | Transmittance (%) |
| 940 | 0.58 |
| 945 | 0.61 |
| 950 | 0.75 |
| 955 | 0.74 |
| 960 | 0.88 |
| 965 | 0.78 |
| 970 | 0.98 |
| 975 | 0.93 |
| 980 | 1.22 |
| 985 | 1.24 |
| 990 | 1.35 |
| 995 | 1.45 |
| 1000 | 1.53 |
| 1005 | 1.69 |
| 1010 | 1.83 |
| 1015 | 1.89 |
| 1020 | 2.04 |
| 1025 | 2.19 |
| 1030 | 2.35 |
| 1035 | 2.49 |
| 1040 | 2.70 |
| 1045 | 2.88 |
| 1050 | 2.99 |

Table 2B shows the values of parameters of the optical lens assembly of Example 1.

| Table 2B | | | |
|---|---|---|---|
| Wt50 (nm) | 607 | T85 (%) | 0.00 |
| T6065 (%) | 37.09 | T94 (%) | 0.58 |
| T6570 (%) | 11.50 | T105 (%) | 2.99 |
| T70105 (%) | 1.19 | | |

[Example 2]

The optical lens assembly of Example 2 includes at least three optical lens elements, the at least three optical lens elements include, in order from an object side to an image side of the optical lens assembly, a first optical lens element, a second optical lens element and a third optical lens element, and the optical lens assembly of Example 2 includes a blue-glass lens element, a long-wavelength absorbing lens element and a long-wavelength filtering lens element.
The long-wavelength filtering lens element includes a long-wavelength filtering coating membrane, and the long-wavelength filtering coating membrane can be disposed on an object-side surface or an image-side surface of the long-wavelength filtering lens element. The long-wavelength filtering coating membrane includes at least one low refractive index layer and at least one high refractive index layer, and the long-wavelength filtering coating membrane is formed by alternately stacking the high refractive index layer and the low refractive index layer.

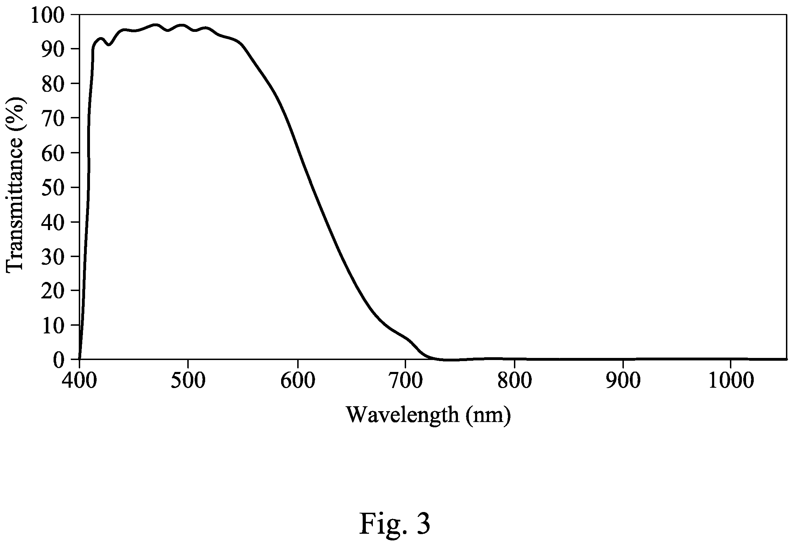

Fig. 3 is a relationship diagram between transmittances and wavelengths of an optical lens assembly according to Example 2, and Table 3A shows the values of transmittance in a wavelength range of 400 nm to 1050 nm of the optical lens assembly of Example 2.

| Table 3A | |
|---|---|
| Wavelength (nm) | Transmittance (%) |
| 400 | 3.88 |
| 405 | 26.02 |
| 410 | 81.61 |
| 415 | 91.72 |
| 420 | 93.03 |
| 425 | 91.62 |
| 430 | 92.54 |
| 435 | 95.16 |
| 440 | 95.53 |
| 445 | 95.19 |
| 450 | 95.19 |
| 455 | 95.97 |
| 460 | 96.09 |
| 465 | 96.44 |
| 470 | 96.72 |
| 475 | 95.99 |
| 480 | 95.42 |
| 485 | 96.35 |
| 490 | 96.65 |
| 495 | 96.77 |
| 500 | 95.95 |
| 505 | 95.39 |
| 510 | 96.17 |
| 515 | 96.07 |
| 520 | 94.99 |
| 525 | 93.95 |
| 530 | 93.22 |
| 535 | 92.98 |
| 540 | 92.43 |
| 545 | 91.17 |
| 550 | 89.42 |
| 555 | 87.29 |
| 560 | 85.19 |
| 565 | 83.24 |
| 570 | 80.69 |

(continued)

| Table 3A | |
|---|---|
| Wavelength (nm) | Transmittance (%) |
| 575 | 77.60 |
| 580 | 74.25 |
| 585 | 71.11 |
| 590 | 67.52 |
| 595 | 63.41 |
| 600 | 58.95 |
| 605 | 54.50 |
| 610 | 50.35 |
| 615 | 46.86 |
| 620 | 43.10 |
| 625 | 39.42 |
| 630 | 35.39 |
| 635 | 31.65 |
| 640 | 28.19 |
| 645 | 25.19 |
| 650 | 22.33 |
| 655 | 19.51 |
| 660 | 17.03 |
| 665 | 14.78 |
| 670 | 12.78 |
| 675 | 11.13 |
| 680 | 9.61 |
| 685 | 8.17 |
| 690 | 7.03 |
| 695 | 5.97 |
| 700 | 4.33 |
| 705 | 2.76 |
| 710 | 1.66 |
| 715 | 0.72 |
| 720 | 0.19 |
| 725 | 0.07 |
| 730 | 0.03 |
| 735 | 0.02 |
| 740 | 0.02 |
| 745 | 0.02 |
| 750 | 0.01 |
| 755 | 0.01 |
| 760 | 0.01 |

(continued)

| Table 3A | |
|---|---|
| Wavelength (nm) | Transmittance (%) |
| 765 | 0.01 |
| 770 | 0.00 |
| 775 | 0.01 |
| 780 | 0.01 |
| 785 | 0.01 |
| 790 | 0.01 |
| 795 | 0.01 |
| 800 | 0.00 |
| 805 | 0.01 |
| 810 | 0.01 |
| 815 | 0.01 |
| 820 | 0.00 |
| 825 | 0.01 |
| 830 | 0.00 |
| 835 | 0.01 |
| 840 | 0.00 |
| 845 | 0.02 |
| 850 | 0.00 |
| 855 | 0.00 |
| 860 | 0.00 |
| 865 | 0.00 |
| 870 | 0.00 |
| 875 | 0.00 |
| 880 | 0.00 |
| 885 | 0.00 |
| 890 | 0.00 |
| 895 | 0.00 |
| 900 | 0.00 |
| 905 | 0.00 |
| 910 | 0.00 |
| 915 | 0.00 |
| 920 | 0.00 |
| 925 | 0.00 |
| 930 | 0.00 |
| 935 | 0.00 |
| 940 | 0.00 |
| 945 | 0.00 |
| 950 | 0.00 |

(continued)

| Table 3A | |
|---|---|
| Wavelength (nm) | Transmittance (%) |
| 955 | 0.00 |
| 960 | 0.00 |
| 965 | 0.00 |
| 970 | 0.00 |
| 975 | 0.00 |
| 980 | 0.00 |
| 985 | 0.00 |
| 990 | 0.00 |
| 995 | 0.00 |
| 1000 | 0.00 |
| 1005 | 0.00 |
| 1010 | 0.00 |
| 1015 | 0.00 |
| 1020 | 0.00 |
| 1025 | 0.00 |
| 1030 | 0.00 |
| 1035 | 0.00 |
| 1040 | 0.00 |
| 1045 | 0.00 |
| 1050 | 0.00 |

Table 3B shows the values of parameters of the optical lens assembly of Example 2.

| Table 3B | | | |
|---|---|---|---|
| Wt50 (nm) | 611 | T85 (%) | 0.00 |
| T6065 (%) | 39.63 | T94 (%) | 0.00 |
| T6570 (%) | 12.06 | T105 (%) | 0.00 |
| T70105 (%) | 0.14 | | |

Table 3C shows the details of the long-wavelength filtering lens element and the long-wavelength filtering coating membrane of the optical lens assembly of Example 2, wherein tLs is a total number of layers of the long-wavelength filtering coating membrane, tTk is a total thickness of the long-wavelength filtering coating membrane, LtTk is a total thickness of the low refractive index layer, HtTk is a total thickness of the high refractive index layer, NL is a refractive index of the low refractive index layer, and NH is a refractive index of the high refractive index layer.

| Table 3C | | | |
|---|---|---|---|
| tLs | 46 | LtTk/HtTk | 1.61 |
| tTk (nm) | 5784 | NL | 1.46 |
| LtTk (nm) | 3571 | NH | 2.32 |
| HtTk (nm) | 2213 | NH-NL | 0.86 |

Table 3D shows the details of each layer of the long-wavelength filtering coating membrane of the long-wavelength filtering lens element of Example 2, wherein "H" represents high refractive index layers, and "L" represents low refractive index layers.

| Table 3D | | | |
|---|---|---|---|
| Layers | Material | Refractive index | Thickness (nm) |
| 1 | H | 2.32 | 11 |
| 2 | L | 1.46 | 38 |
| 3 | H | 2.32 | 114 |
| 4 | L | 1.46 | 171 |
| 5 | H | 2.32 | 100.8 |
| 6 | L | 1.46 | 167 |
| 7 | H | 2.32 | 111 |
| 8 | L | 1.46 | 186 |
| 9 | H | 2.32 | 117 |
| 10 | L | 1.46 | 190 |
| 11 | H | 2.32 | 117 |
| 12 | L | 1.46 | 194 |
| 13 | H | 2.32 | 118 |
| 14 | L | 1.46 | 190 |
| 15 | H | 2.32 | 118 |
| 16 | L | 1.46 | 194 |
| 17 | H | 2.32 | 117 |
| 18 | L | 1.46 | 189 |
| 19 | H | 2.32 | 117 |
| 20 | L | 1.46 | 190 |
| 21 | H | 2.32 | 113 |
| 22 | L | 1.46 | 170 |
| 23 | H | 2.32 | 93 |
| 24 | L | 1.46 | 154 |
| 25 | H | 2.32 | 92 |
| 26 | L | 1.46 | 148 |
| 27 | H | 2.32 | 89 |
| 28 | L | 1.46 | 143 |
| 29 | H | 2.32 | 88 |
| 30 | L | 1.46 | 147 |
| 31 | H | 2.32 | 86 |
| 32 | L | 1.46 | 145 |
| 33 | H | 2.32 | 85 |
| 34 | L | 1.46 | 144 |
| 35 | H | 2.32 | 86 |
| 36 | L | 1.46 | 144 |

(continued)

| Table 3D | | | |
|---|---|---|---|
| Layers | Material | Refractive index | Thickness (nm) |
| 37 | H | 2.32 | 86 |
| 38 | L | 1.46 | 146 |
| 39 | H | 2.32 | 85 |
| 40 | L | 1.46 | 147 |
| 41 | H | 2.32 | 87 |
| 42 | L | 1.46 | 146 |
| 43 | H | 2.32 | 92 |
| 44 | L | 1.46 | 152 |
| 45 | H | 2.32 | 90 |
| 46 | L | 1.46 | 75 |

The optical lens assemblies of the 1st design example to the 5th design example are provided for specific illustration, and the optical lens assembly of each of the 1st design example to the 5th design example is the applicable optical design of the optical lens assembly of Example 1 and the optical lens assembly of Example 2.

<1st design example>

The optical lens assembly of the 1st design example includes three optical lens elements, and the three optical lens elements are, in order from an object side to an image side of the optical lens assembly, a first optical lens element, a second optical lens element and a third optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic, and the second optical lens element is the long-wavelength absorbing lens element. The third optical lens element is made of a plastic.

Table 4A shows the parameters of the optical lens assembly of the 1st design example, wherein L1 to L3 respectively represent the first optical lens element to the third optical lens element, N is a refractive index of the optical lens element (Wavelength = 587.6 nm), V is an Abbe number of the optical lens element (Wavelength = 587.6 nm), CT is a central thickness along the optical axis of the optical lens element, R1 is a radius of curvature on the optical axis of the object-side surface of the optical lens element, YR1 is a maximum effective diameter of the object-side surface of the optical lens element, SAGR1 is a maximum horizontal displacement on the object-side surface of the optical lens element, R2 is a radius of curvature on the optical axis of the image-side surface of the optical lens element, YR2 is a maximum effective diameter of the image-side surface of the optical lens element, SAGR2 is a maximum horizontal displacement on the image-side surface of the optical lens element, F is a total focal length of the optical lens assembly, FOV is a maximum field of view of the optical lens assembly, TD is an axial distance between the object-side surface of the first optical lens element and an image-side surface of a last one of the optical lens elements, and ImgH is a maximum image height of the optical lens assembly.

| Table 4A | | | |
|---|---|---|---|
| | L1 | L2 | L3 |
| N | 1.59 | 1.59 | 1.55 |
| V | 61.25 | 28.21 | 55.98 |
| CT (mm) | 0.23 | 0.15 | 0.47 |
| R1 (mm) | 1.20 | -1.74 | 0.62 |
| YR1 (mm) | 0.34 | 0.62 | 1.38 |

(continued)

| Table 4A | | | |
|---|---|---|---|
| | L1 | L2 | L3 |
| SAGR1 (mm) | 0.05 | -0.11 | 0.20 |
| R2 (mm) | 5.66 | -7.73 | 1.14 |
| YR2(mm) | 0.40 | 0.74 | 1.61 |
| SAGR2 (mm) | 0.01 | -0.07 | 0.04 |
| F (mm) | 1.71 | | |
| FOV (degrees) | 84.78 | | |
| TD (mm) | 1.54 | | |
| ImgH (mm) | 2.06 | | |

If the definitions of parameters shown in tables of the following examples are the same as those shown in Table 4A, those will not be described again.

Table 4B shows the details of the parameters of the optical path of the optical lens assembly of the 1st design example, wherein CPmax is a maximum of the optical paths of a chief ray in the all fields of view of the optical lens element, CPmin is a minimum of the optical paths of the chief ray in the all fields of view of the optical lens element, CPavg is an average of the optical paths of the chief ray in the all fields of view of the optical lens element, CPst is a standard deviation of the optical paths of the chief ray in the all fields of view of the optical lens element, CPB is an optical path of the chief ray on the five of the evenly divided fields of view of the optical lens element, and CP0 is an optical path of the chief ray on the 0.0 F of the optical lens element.

| Table 4B | | | |
|---|---|---|---|
| | L1 | L2 | L3 |
| CPmax (mm) | 0.25 | 0.20 | 0.52 |
| CPmin (mm) | 0.23 | 0.15 | 0.41 |
| CPavg (mm) | 0.24 | 0.17 | 0.48 |
| CPst | 0.008 | 0.013 | 0.025 |
| Field of view | CPB/CPO | | |
| 0.2 F | 1.01 | 1.05 | 0.98 |
| 0.4 F | 1.04 | 1.11 | 0.98 |
| 0.6 F | 1.07 | 1.13 | 1.06 |
| 0.8 F | 1.09 | 1.20 | 1.10 |
| 1.0 F | 1.11 | 1.33 | 0.87 |

If the definitions of parameters shown in tables of the following examples are the same as those shown in Table 4B, those will not be described again.

Table 4C shows the details of the parameters and the arranging factors of the optical lens element of the optical lens assembly of the 1st design example, wherein CTB is a central thickness along an optical axis of the blue-glass lens element, CTA is a central thickness along an optical axis of the long-wavelength absorbing lens element, TD is an axial distance between an object-side surface of the first optical lens element and an image-side surface of a last one of the optical lens elements, Fb1 is a first arranging factor of the blue-glass lens element, Fb2 is a second arranging factor of the blue-glass lens element, Fb3 is a third arranging factor of the blue-glass lens element, Fb4 is a fourth arranging factor of the blue-glass lens element, Fb5 is a fifth arranging factor of the blue-glass lens element, Fb6 is a sixth arranging factor of the blue-glass lens element, FBY is an effective diameter arranging factor of the blue-glass lens element, FB is a comprehensive arranging factor of the blue-glass lens element, FA is a main arranging factor of the long-wavelength absorbing lens element, Fam is a material arranging factor of the long-wavelength absorbing lens element, FcR1 is a coating arranging factor of an object-side surface of the long-wavelength filtering lens element, FcR2 is a coating arranging factor of an image-side surface of the long-wavelength filtering lens element, FbcR1 is a merge arranging factor of an object-side surface of the blue-glass lens element, FbcR2 is a merge arranging factor of the blue-glass lens element image-side surface, FOV is the maximum field of view of the optical lens assembly, and F is the total focal length of the optical lens assembly.

| Table 4C | | | |
|---|---|---|---|
| | L1 | L2 | L3 |
| CTB/CTA | 1.52 | | |
| (CTB+CTA)/TD | 0.25 | | |
| Fb1 = CPmax/CPmin | 1.11 | 1.33 | 1.27 |
| Fb2 = (CPmax-CPmin)/CT | 0.11 | 0.33 | 0.23 |
| Fb3 = CPavg/CT | 1.05 | 1.13 | 1.02 |
| Fb4 = CPst/CT | 0.04 | 0.09 | 0.05 |
| Fb5 = CT/TD | 0.148 | 0.097 | 0.304 |
| Fb6 = CPB/CP0 | 1.01~1.11 | 1.05~1.33 | 0.87~1.10 |
| Arranging evaluation of blue glass | b | b | b |
| FbY = YR1/ImgH | 0.17 | | |
| FB = LOG(1/(\|Fb1-1\|×\|Fb3-1\|×Fb2×Fb4)) | 4.66 | 2.91 | 4.23 |
| FA = LOG(1/(\|(CPavg/CT-1) ×CPst/CT)\|)) | 2.73 | 1.95 | 3.03 |
| Arranging evaluation of long-wavelength absorption | a | a | a |
| Fam = V/N | 38.50 | 17.76 | 36.21 |
| FcR1 = \|YR1/SAGR1\|×CT/TD×10 | 10.62 | 5.40 | 20.91 |
| Arranging evaluation of long-wavelength filtration | c | - | c |
| FcR2 = \|YR2/SAGR2\|×CT/TD×10 | 118.81 | 10.19 | 139.62 |
| Arranging evaluation of long-wavelength filtration | c | c | c |
| FbcR1 = \|YR1/SAGR1\|×CPavg/CT | 7.53 | 6.25 | 7.00 |
| FbcR2 = \|YR2/SAGR2\|×CPavg/CT | 84.22 | 11.79 | 46.72 |
| tan(FOV/2)×F | 1.56 | | |

In the 1st design example, the blue-glass lens element of the optical lens assembly is only for demonstration example, and the arrangement of the blue-glass lens element is determined based on the arranging evaluation of blue glass. In Table 4C, "b" represents it meets the arranging evaluation of blue glass. If the optical lens element meets the arranging evaluation of blue glass, it represents that the optical lens element satisfies "$0.80 \leq$ Fb6 $\leq 1.50$", and the optical lens element can be arranged as the blue-glass lens element. In the 1st design example, the long-wavelength absorbing lens element of the optical lens assembly is only for demonstration example, and the arrangement of the long-wavelength absorbing lens element is determined based on the arranging evaluation of long-wavelength absorption. In Table 4C, "a" represents it meets the arranging evaluation of long-wavelength absorption. If the optical lens element meets the arranging evaluation of long-wavelength absorption, it represents that the optical lens element satisfies "$1.50 \leq$ FA", and the optical lens element can be arranged as the long-wavelength absorbing lens element. In the 1st design example, the long-wavelength filtering lens element of the optical lens assembly is only for demonstration example, and the arrangement of the long-wavelength filtering lens element is determined based on the arranging evaluation of long-wavelength filtration. In Table 4C, "c" represents it meets the arranging evaluation of long-wavelength filtration. If the optical lens element meets the arranging evaluation of long-wavelength filtration, it represents that the object-side surface of the optical lens element satisfies "$10.00 \leq$ FcR1" or the image-side surface of the optical lens element satisfies "$10.00 \leq$ FcR2", and the optical lens element can be arranged as the long-wavelength filtering lens element.

If the definitions of parameters shown in tables of the following examples are the same as those shown in Table 4C, those will not be described again. Further, the blue-glass lens element, the long-wavelength absorbing lens element and the long-wavelength filtering lens element of the optical lens assembly of the following examples are only for demonstration examples, and the arrangements thereof are based on the arranging evaluation of blue glass, the arranging evaluation of long-wavelength absorption and the arranging evaluation of long-wavelength filtration. The definitions of the arranging evaluation of blue glass, the arranging evaluation of long-wavelength absorption and the arranging evaluation of long-wavelength filtration are also the same as those shown in the 1st design example, and those will not be described again.

<2nd design example>

The optical lens assembly of the 2nd design example includes four optical lens elements, and the four optical lens elements are, in order from an object side to an image side of the optical lens assembly, a first optical lens element, a second optical lens element, a third optical lens element and a fourth optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic, and the second optical lens element is the long-wavelength absorbing lens element. The third optical lens element is made of a plastic. The fourth optical lens element is made of a plastic.

Table 5A shows the parameters of the optical lens assembly of the 2nd design example, wherein L1 to L4 respectively represent the first optical lens element to the fourth optical lens element.

| Table 5A | | | | |
|---|---|---|---|---|
| | L1 | L2 | L3 | L4 |
| N | 1.50 | 1.67 | 1.54 | 1.54 |
| V | 81.56 | 19.45 | 55.98 | 55.98 |
| CT (mm) | 0.30 | 0.15 | 0.26 | 0.23 |
| R1 (mm) | 0.73 | -3.44 | -1.41 | 7.64 |
| YR1 (mm) | 0.41 | 0.39 | 0.62 | 1.34 |
| SAGR1 (mm) | 0.13 | -0.06 | -0.10 | -0.44 |
| R2 (mm) | 1.93 | -4.59 | -0.78 | 0.81 |
| YR2(mm) | 0.37 | 0.48 | 0.74 | 1.56 |
| SAGR2 (mm) | 0.03 | -0.04 | -0.20 | -0.36 |
| F (mm) | 1.97 | | | |
| FOV (degrees) | 90.89 | | | |
| TD (mm) | 1.87 | | | |
| ImgH (mm) | 2.06 | | | |

Table 5B shows the details of the parameters of the optical path of the optical lens assembly of the 2nd design example.

| Table 5B | | | | |
|---|---|---|---|---|
| | L1 | L2 | L3 | L4 |
| CPmax (mm) | 0.34 | 0.17 | 0.26 | 0.55 |
| CPmin (mm) | 0.30 | 0.15 | 0.19 | 0.23 |
| CPavg (mm) | 0.31 | 0.15 | 0.23 | 0.41 |
| CPst | 0.015 | 0.007 | 0.024 | 0.115 |
| Field of view | CPB/CP0 | | | |
| 0.2 F | 1.01 | 1.01 | 0.97 | 1.20 |

(continued)

| Table 5B | | | | |
|---|---|---|---|---|
| | L1 | L2 | L3 | L4 |
| 0.4 F | 1.04 | 1.03 | 0.90 | 1.70 |
| 0.6 F | 1.07 | 1.06 | 0.82 | 2.19 |
| 0.8 F | 1.11 | 1.10 | 0.76 | 2.37 |
| 1.0 F | 1.15 | 1.16 | 0.76 | 1.86 |

Table 5C shows the details of the parameters and the arranging factors of the optical lens element of the optical lens assembly of the 2nd design example.

| Table 5C | | | | |
|---|---|---|---|---|
| | L1 | L2 | L3 | L4 |
| CTB/CTA | 2.03 | | | |
| (CTB+CTA)/TD | 0.24 | | | |
| Fb1 = CPmax/CPmin | 1.15 | 1.16 | 1.34 | 2.37 |
| Fb2 = (CPmax-CPmin)/CT | 0.15 | 0.16 | 0.25 | 1.37 |
| Fb3 = CPavg/CT | 1.06 | 1.06 | 0.87 | 1.79 |
| Fb4 = CPst/CT | 0.05 | 0.05 | 0.09 | 0.50 |
| Fb5 = CT/TD | 0.158 | 0.078 | 0.139 | 0.123 |
| Fb6 = CPB/CP0 | 1.01~1.15 | 1.01~1.16 | 0.76~0.97 | 1.20~2.37 |
| Arranging evaluation of blue glass | b | b | - | - |
| FbY = YR1/ImgH | 0.20 | | | |
| FB = LOG(1/(\|Fb1-1\|×\|Fb3-1\|×Fb2×Fb4)) | 4.15 | 4.12 | 2.98 | 0.13 |
| FA = LOG(1/(\|(CPavg/CT-1) ×CPst/CT)\|) | 2.52 | 2.55 | 1.91 | 0.40 |
| Arranging evaluation of long-wavelength absorption | a | a | a | - |
| Fam = V/N | 54.48 | 11.65 | 36.26 | 36.26 |
| FcR1 = \|YR1/SAGR1\|×CT/TD×10 | 5.09 | 5.42 | 9.05 | 3.78 |
| Arranging evaluation of long-wavelength filtration | | | | |
| FcR2 = \|YR2/SAGR2\|×CT/TD×10 | 19.42 | 9.04 | 5.22 | 5.39 |
| Arranging evaluation of long-wavelength filtration | c | - | - | - |
| FbcR1 = \|YR1/SAGR1\|×CPavg/CT | 3.42 | 7.37 | 5.63 | 5.49 |
| FbcR2 = \|YR2/SAGR2\|×CPavg/CT | 13.04 | 12.30 | 3.25 | 7.83 |
| tan(FOV/2)×F | 2.00 | | | |

<3rd design example>

The optical lens assembly of the 3rd design example includes four optical lens elements, and the four optical lens elements are, in order from an object side to an image side of the optical lens assembly, a first optical lens element, a second optical lens element, a third optical lens element and a fourth optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic, and the second optical lens element is the long-wavelength absorbing lens element. The third optical lens element is made of a plastic. The fourth optical lens element is made of a plastic.

Table 6A shows the parameters of the optical lens assembly of the 3rd design example, wherein L1 to L4 respectively represent the first optical lens element to the fourth optical lens element.

| Table 6A | | | | |
|---|---|---|---|---|
| | L1 | L2 | L3 | L4 |
| N | 1.50 | 1.68 | 1.55 | 1.55 |
| V | 81.56 | 19.45 | 55.98 | 55.98 |
| CT (mm) | 0.31 | 0.14 | 0.25 | 0.25 |
| R1 (mm) | 0.82 | -3.47 | -1.78 | 2.23 |
| YR1 (mm) | 0.41 | 0.42 | 0.57 | 1.31 |
| SAGR1 (mm) | 0.11 | -0.06 | -0.09 | -0.41 |
| R2 (mm) | 3.00 | -9.20 | -0.80 | 0.60 |
| YR2 (mm) | 0.40 | 0.49 | 0.70 | 1.55 |
| SAGR2 (mm) | 0.01 | -0.03 | -0.18 | -0.32 |
| F (mm) | 1.96 | | | |
| FOV (degrees) | 90.90 | | | |
| TD (mm) | 1.84 | | | |
| ImgH (mm) | 2.06 | | | |

Table 6B shows the details of the parameters of the optical path of the optical lens assembly of the 3rd design example.

| Table 6B | | | | |
|---|---|---|---|---|
| | L1 | L2 | L3 | L4 |
| CPmax (mm) | 0.36 | 0.17 | 0.25 | 0.57 |
| CPmin (mm) | 0.31 | 0.14 | 0.18 | 0.25 |
| CPavg (mm) | 0.33 | 0.15 | 0.21 | 0.44 |
| CPst | 0.016 | 0.009 | 0.025 | 0.116 |
| Field of view | CPB/CP0 | | | |
| 0.2 F | 1.01 | 1.01 | 0.97 | 1.19 |
| 0.4 F | 1.04 | 1.04 | 0.90 | 1.64 |
| 0.6 F | 1.08 | 1.09 | 0.81 | 2.12 |
| 0.8 F | 1.12 | 1.14 | 0.74 | 2.27 |
| 1.0 F | 1.16 | 1.21 | 0.75 | 1.80 |

Table 6C shows the details of the parameters and the arranging factors of the optical lens element of the optical lens assembly of the 3rd design example.

| Table 6C | | | | |
|---|---|---|---|---|
| | L1 | L2 | L3 | L4 |
| CTB/CTA | 2.21 | | | |
| (CTB+CTA)/TD | 0.24 | | | |

(continued)

| Table 6C | | | | |
|---|---|---|---|---|
| | L1 | L2 | L3 | L4 |
| Fb1 = CPmax/CPmin | 1.16 | 1.21 | 1.36 | 2.28 |
| Fb2 = (CPmax-CPmin)/CT | 0.16 | 0.21 | 0.27 | 1.28 |
| Fb3 = CPavg/CT | 1.06 | 1.08 | 0.86 | 1.74 |
| Fb4 = CPst/CT | 0.05 | 0.07 | 0.10 | 0.46 |
| Fb5 = CT/TD | 0.168 | 0.076 | 0.134 | 0.136 |
| Fb6 = CPB/CPO | 1.01~1.16 | 1.01~1.21 | 0.74~0.97 | 1.19~2.27 |
| Arranging evaluation of blue glass | b | b | - | - |
| FbY = YR1/ImgH | 0.20 | | | |
| FB = LOG(1/(|Fb1-1|×|Fb3-1|×Fb2×Fb4)) | 4.10 | 3.66 | 2.88 | 0.25 |
| FA = LOG(1/(|(CPavg/CT-1) ×CPst/CT)|) | 2.49 | 2.30 | 1.86 | 0.46 |
| Arranging evaluation of long-wavelength absorption | a | a | a | - |
| Fam = V/N | 54.44 | 11.61 | 36.21 | 36.21 |
| FcR1 = |YR1/SAGR1|×CT/TD×10 | 6.38 | 5.64 | 8.96 | 4.35 |
| Arranging evaluation of long-wavelength filtration | - | - | - | - |
| FcR2 = |YR2/SAGR2|×CT/TD×10 | 51.73 | 12.40 | 5.09 | 6.60 |
| Arranging evaluation of long-wavelength filtration | c | c | - | - |
| FbcR1 = |YR1/SAGR1|×CPavg/CT | 4.04 | 8.00 | 5.73 | 5.58 |
| FbcR2 = |YR2/SAGR2|×CPavg/CT | 32.75 | 17.60 | 3.26 | 8.47 |
| tan(FOV/2)×F | 1.99 | | | |

<4th design example>

The optical lens assembly of the 4th design example includes five optical lens elements, and the five optical lens elements are, in order from an object side to an image side of the optical lens assembly, a first optical lens element, a second optical lens element, a third optical lens element, a fourth optical lens element and a fifth optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic, and the third optical lens element is the long-wavelength absorbing lens element. The fourth optical lens element is made of a plastic. The fifth optical lens element is made of a plastic.

Table 7A shows the parameters of the optical lens assembly of the 4th design example, wherein L1 to L5 respectively represent the first optical lens element to the fifth optical lens element.

| Table 7A | | | | | |
|---|---|---|---|---|---|
| | L1 | L2 | L3 | L4 | L5 |
| N | 1.59 | 1.68 | 1.55 | 1.55 | 1.54 |
| V | 68.62 | 19.45 | 55.98 | 55.98 | 55.96 |
| CT (mm) | 0.42 | 0.18 | 0.24 | 0.61 | 0.36 |
| R1 (mm) | 1.22 | 5.14 | 2.48 | -12.86 | 6.40 |
| YR1 (mm) | 0.45 | 0.55 | 0.69 | 0.91 | 1.37 |

(continued)

| Table 7A | | | | | |
|---|---|---|---|---|---|
| | L1 | L2 | L3 | L4 | L5 |
| SAGR1 (mm) | 0.08 | 0.03 | -0.02 | -0.16 | -0.32 |
| R2 (mm) | 110.72 | 1.89 | 2.30 | -0.62 | 0.57 |
| YR2(mm) | 0.53 | 0.58 | 0.81 | 1.10 | 1.74 |
| SAGR2 (mm) | -0.02 | 0.11 | -0.06 | -0.51 | -0.10 |
| F (mm) | 2.07 | | | | |
| FOV (degrees) | 81.63 | | | | |
| TD (mm) | 2.37 | | | | |
| ImgH (mm) | 2.06 | | | | |

Table 7B shows the details of the parameters of the optical path of the optical lens assembly of the 4th design example.

| Table 7B | | | | | |
|---|---|---|---|---|---|
| | L1 | L2 | L3 | L4 | L5 |
| CPmax (mm) | 0.46 | 0.21 | 0.26 | 0.61 | 0.83 |
| CPmin (mm) | 0.42 | 0.18 | 0.24 | 0.30 | 0.36 |
| CPavg (mm) | 0.44 | 0.19 | 0.25 | 0.43 | 0.63 |
| CPst | 0.014 | 0.010 | 0.009 | 0.115 | 0.173 |
| Field of view | CPB/CPO | | | | |
| 0.2 F | 1.01 | 1.01 | 1.02 | 0.92 | 1.17 |
| 0.4 F | 1.03 | 1.04 | 1.05 | 0.75 | 1.61 |
| 0.6 F | 1.05 | 1.09 | 1.09 | 0.58 | 2.09 |
| 0.8 F | 1.08 | 1.13 | 1.11 | 0.49 | 2.31 |
| 1.0 F | 1.10 | 1.17 | 1.07 | 0.50 | 2.05 |

Table 7C shows the details of the parameters and the arranging factors of the optical lens element of the optical lens assembly of the 4th design example.

| Table 7C | | | | | |
|---|---|---|---|---|---|
| | L1 | L2 | L3 | L4 | L5 |
| CTB/CTA | 1.76 | | | | |
| (CTB+CTA)/TD | 0.28 | | | | |
| Fb1 = CPmax/CPmin | 1.10 | 1.17 | 1.11 | 2.06 | 2.31 |
| Fb2 = (CPmax-CPmin)/CT | 0.10 | 0.17 | 0.11 | 0.51 | 1.31 |
| Fb3 = CPavg/CT | 1.04 | 1.07 | 1.06 | 0.70 | 1.75 |
| Fb4 = CPst/CT | 0.03 | 0.06 | 0.04 | 0.19 | 0.48 |
| Fb5 = CT/TD | 0.177 | 0.076 | 0.101 | 0.259 | 0.151 |
| Fb6 = CPB/CPO | 1.01~ 1.10 | 1.01~ 1.17 | 1.02~ 1.11 | 0.49~ 0.92 | 1.17~ 2.31 |
| Arranging evaluation of blue glass | b | b | b | | |

(continued)

| Table 7C | | | | | |
|---|---|---|---|---|---|
| | L1 | L2 | L3 | L4 | L5 |
| FbY = YR1/ImgH | 0.22 | | | | |
| FB = LOG(1/(\|Fb1-1\|×\|Fb3-1\|×Fb2×Fb4)) | 4.78 | 3.90 | 4.57 | 1.51 | 0.21 |
| FA = LOG(1/(\|(CPavg/CT-1) ×CPst/CT)\|) | 2.81 | 2.39 | 2.63 | 1.24 | 0.44 |
| Arranging evaluation of long-wavelength absorption | a | a | a | - | - |
| Fam = V/N | 43.05 | 11.61 | 36.21 | 36.21 | 36.43 |
| FcR1 = \|YR1/SAGR1\|×CT/TD×10 | 9.59 | 14.91 | 34.44 | 14.88 | 6.44 |
| Arranging evaluation of long-wavelength filtration | - | c | c | c | - |
| FcR2 = \|YR2/SAGR2\|×CT/TD×10 | 42.75 | 3.98 | 14.72 | 5.58 | 26.38 |
| Arranging evaluation of long-wavelength filtration | c | - | c | - | c |
| FbcR1 = \|YR1/SAGR1\|×CPavg/CT | 5.65 | 21.14 | 36.36 | 4.02 | 7.44 |
| FbcR2 = \|YR2/SAGR2\|×CPavg/CT | 25.17 | 5.64 | 15.54 | 1.51 | 30.47 |
| tan(FOV/2)×F | 1.78 | | | | |

<5th design example>

The optical lens assembly of the 5th design example includes five optical lens elements, and the five optical lens elements are, in order from an object side to an image side of the optical lens assembly, a first optical lens element, a second optical lens element, a third optical lens element, a fourth optical lens element and a fifth optical lens element. Each of the optical lens elements has an object-side surface facing the object side and an image-side surface facing the image side.

The first optical lens element is made of a glass. The second optical lens element is made of a plastic, and the second optical lens element is the long-wavelength absorbing lens element. The third optical lens element is made of a glass, and the third optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The fourth optical lens element is made of a plastic. The fifth optical lens element is made of a plastic.

Table 8A shows the parameters of the optical lens assembly of the 5th design example, wherein L1 to L5 respectively represent the first optical lens element to the fifth optical lens element.

| Table 8A | | | | | |
|---|---|---|---|---|---|
| | L1 | L2 | L3 | L4 | L5 |
| N | 1.59 | 1.68 | 1.59 | 1.55 | 1.54 |
| V | 68.62 | 19.45 | 61.25 | 55.98 | 55.96 |
| CT (mm) | 0.46 | 0.17 | 0.23 | 0.55 | 0.36 |
| R1 (mm) | 1.21 | 3.40 | 2.74 | -63.95 | 5.80 |
| YR1 (mm) | 0.46 | 0.56 | 0.67 | 0.92 | 1.33 |
| SAGR1 (mm) | 0.09 | 0.05 | -0.02 | -0.14 | -0.30 |
| R2 (mm) | 14.96 | 1.75 | 2.57 | -0.66 | 0.55 |
| YR2(mm) | 0.54 | 0.58 | 0.78 | 1.10 | 1.73 |
| SAGR2 (mm) | -0.02 | 0.12 | -0.05 | -0.46 | -0.07 |
| F (mm) | 2.07 | | | | |

(continued)

| Table 8A | | | | | |
|---|---|---|---|---|---|
| | L1 | L2 | L3 | L4 | L5 |
| FOV (degrees) | 79.98 | | | | |
| TD (mm) | 2.34 | | | | |
| ImgH (mm) | 2.06 | | | | |

Table 8B shows the details of the parameters of the optical path of the optical lens assembly of the 5th design example.

| Table 8B | | | | | |
|---|---|---|---|---|---|
| | L1 | L2 | L3 | L4 | L5 |
| CPmax (mm) | 0.51 | 0.20 | 0.26 | 0.55 | 0.85 |
| CPmin (mm) | 0.46 | 0.17 | 0.23 | 0.26 | 0.36 |
| CPavg (mm) | 0.48 | 0.18 | 0.25 | 0.38 | 0.63 |
| CPst | 0.015 | 0.009 | 0.009 | 0.107 | 0.181 |
| Field of view | CPB/CPO | | | | |
| 0.2 F | 1.01 | 1.01 | 1.01 | 0.91 | 1.17 |
| 0.4 F | 1.03 | 1.04 | 1.05 | 0.73 | 1.62 |
| 0.6 F | 1.05 | 1.09 | 1.08 | 0.56 | 2.13 |
| 0.8 F | 1.08 | 1.13 | 1.10 | 0.48 | 2.37 |
| 1.0 F | 1.10 | 1.17 | 1.08 | 0.50 | 2.11 |

Table 8C shows the details of the parameters and the arranging factors of the optical lens element of the optical lens assembly of the 5th design example.

| Table 8C | | | | | |
|---|---|---|---|---|---|
| | L1 | L2 | L3 | L4 | L5 |
| CTB/CTA | 1.39 | | | | |
| (CTB+CTA)/TD | 0.17 | | | | |
| Fb1 = CPmax/CPmin | 1.10 | 1.17 | 1.10 | 2.10 | 2.37 |
| Fb2 = (CPmax-CPmin)/CT | 0.10 | 0.17 | 0.10 | 0.52 | 1.37 |
| Fb3 = CPavg/CT | 1.04 | 1.07 | 1.06 | 0.69 | 1.77 |
| Fb4 = CPst/CT | 0.03 | 0.06 | 0.04 | 0.19 | 0.51 |
| Fb5 = CT/TD | 0.195 | 0.072 | 0.099 | 0.236 | 0.152 |
| Fb6 = CPB/CPO | 1.01~1.10 | 1.01~1.17 | 1.01~1.10 | 0.48~0.91 | 1.17~2.37 |
| Arranging evaluation of blue glass | b | b | b | - | - |
| FbY = YR1/ImgH | 0.32 | | | | |
| FB = LOG(1/(\|Fb1-1\|×\|Fb3-1\|×Fb2×Fb4)) | 4.81 | 3.92 | 4.70 | 1.46 | 0.13 |
| FA = LOG(1/(\|(CPavg/CT-1) ×CPst/CT)\|) | 2.82 | 2.39 | 2.69 | 1.22 | 0.41 |
| Arranging evaluation of long-wavelength absorption | a | a | a | - | - |

(continued)

| Table 8C | | | | | |
|---|---|---|---|---|---|
| | L1 | L2 | L3 | L4 | L5 |
| Fam = V/N | 43.05 | 11.61 | 38.50 | 36.21 | 36.43 |
| FcR1 = \|YR1/SAGR1\|×CT/TD×10 | 10.36 | 8.94 | 28.74 | 15.14 | 6.75 |
| Arranging evaluation of long-wavelength filtration | c | - | c | c | - |
| FcR2 = \|YR2/SAGR2\|×CT/TD×10 | 70.08 | 3.49 | 14.89 | 5.67 | 39.42 |
| Arranging evaluation of long-wavelength filtration | c | - | c | - | c |
| FbcR1 = \|YR1/SAGR1\|×CPavg/CT | 5.54 | 13.37 | 30.53 | 4.41 | 7.86 |
| FbcR2 = \|YR2/SAGR2\|×CPavg/CT | 37.48 | 5.22 | 15.82 | 1.65 | 45.88 |
| tan(FOV/2)×F | 1.73 | | | | |

**Claims**

1. An optical lens assembly, **characterized in** comprising:

   at least three optical lens elements comprising, in order from an object side to an image side of the optical lens assembly, a first optical lens element, a second optical lens element and a third optical lens element;
   wherein the at least three optical lens elements comprise a blue-glass lens element, the at least three optical lens elements comprise a long-wavelength absorbing lens element, a sixth arranging factor of the blue-glass lens element is Fb6, a central thickness along an optical axis of the blue-glass lens element is CTB, a central thickness along an optical axis of the long-wavelength absorbing lens element is CTA, an axial distance between an object-side surface of the first optical lens element and an image-side surface of a last one of the optical lens elements is TD, and the following conditions are satisfied:

$$0.85 \leq Fb6 \leq 1.50;$$

   and

$$0.15 \leq (CTB+CTA)/TD \leq 0.40.$$

2. The optical lens assembly of claim 1, wherein a first arranging factor of the blue-glass lens element is Fb1, and the following condition is satisfied:

$$Fb1 \leq 1.50.$$

3. The optical lens assembly of claims 1 or 2, wherein a second arranging factor of the blue-glass lens element is Fb2, and the following condition is satisfied:

$$Fb2 \leq 0.30.$$

4. The optical lens assembly of any one of claims 1 to 3, wherein a third arranging factor of the blue-glass lens element is Fb3, and the following condition is satisfied:

$$0.50 \leq Fb3 \leq 2.00.$$

5. The optical lens assembly of any one of claims 1 to 4, wherein a fourth arranging factor of the blue-glass lens element is Fb4, and the following condition is satisfied:

$$Fb4 \leq 0.10.$$

6. The optical lens assembly of any one of claims 1 to 5, wherein a fifth arranging factor of the blue-glass lens element is Fb5, and the following condition is satisfied:

$$0.05 \leq Fb5 \leq 0.40.$$

7. The optical lens assembly of any one of claims 1 to 6, wherein an effective diameter arranging factor of the blue-glass lens element is FbY, and the following condition is satisfied:

$$FbY \leq 0.27.$$

8. The optical lens assembly of any one of claims 1 to 7, wherein a comprehensive arranging factor of the blue-glass lens element is FB, and the following condition is satisfied:

$$1.00 \leq FB.$$

9. The optical lens assembly of any one of claims 1 to 8, wherein a main arranging factor of the long-wavelength absorbing lens element is FA, and the following condition is satisfied:

$$1.50 \leq FA.$$

10. The optical lens assembly of any one of claims 1 to 9, wherein a material arranging factor of the long-wavelength absorbing lens element is Fam, and the following condition is satisfied:

$$30.00 \leq Fam \leq 40.00.$$

11. The optical lens assembly of any one of claims 1 to 10, wherein the central thickness along the optical axis of the blue-glass lens element is CTB, the central thickness along the optical axis of the long-wavelength absorbing lens element is CTA, and the following condition is satisfied:

$$1.20 \leq CTB/CTA.$$

12. The optical lens assembly of any one of claims 1 to 11, wherein a wavelength at 50% transmittance of the optical lens assembly is Wt50, and the following condition is satisfied:

$$600 \text{ nm} \leq Wt50 \leq 650 \text{ nm}.$$

13. The optical lens assembly of any one of claims 1 to 12, wherein an average transmittance in a wavelength range of 600 nm - 650 nm of the optical lens assembly is T6065, and the following condition is satisfied:

$$T6065 \leq 50.00\%.$$

14. The optical lens assembly of any one of claims 1 to 13, wherein an average transmittance in a wavelength range of 650 nm - 700 nm of the optical lens assembly is T6570, and the following condition is satisfied:

$$T6570 \leq 20.00\%.$$

15. The optical lens assembly of any one of claims 1 to 14, wherein an average transmittance in a wavelength range of 700 nm - 1050 nm of the optical lens assembly is T70105, and the following condition is satisfied:

$$T70105 \leq 3.00\%.$$

16. The optical lens assembly of any one of claims 1 to 15, wherein a transmittance at a wavelength of 850 nm of the optical lens assembly is T85, and the following condition is satisfied:

$$T85 \leq 2.50\%.$$

17. The optical lens assembly of any one of claims 1 to 16, wherein a transmittance at a wavelength of 940 nm of the optical lens assembly is T94, and the following condition is satisfied:

$$T94 \leq 2.50\%.$$

18. The optical lens assembly of any one of claims 1 to 17, wherein a transmittance at a wavelength of 1050 nm of the optical lens assembly is T105, and the following condition is satisfied:

$$T105 \leq 2.50\%.$$

19. An electronic device, **characterized in** comprising:
the optical lens assembly of any one of claims 1 to 18.

20. An optical lens assembly, **characterized in** comprising:

at least three optical lens elements comprising, in order from an object side to an image side of the optical lens assembly, a first optical lens element, a second optical lens element and a third optical lens element;
wherein the at least three optical lens elements comprise a blue-glass lens element, the at least three optical lens elements comprise a long-wavelength filtering lens element, the long-wavelength filtering lens element comprises a long-wavelength filtering coating membrane, the long-wavelength filtering coating membrane comprises at least one low refractive index layer and at least one high refractive index layer, and the long-wavelength filtering coating membrane is formed by alternately stacking the at least one high refractive index layer and the at least one low refractive index layer;
wherein a sixth arranging factor of the blue-glass lens element is Fb6, a coating arranging factor of an object-side surface of the long-wavelength filtering lens element is FcR1, a coating arranging factor of an image-side surface of the long-wavelength filtering lens element is FcR2, and the following conditions are satisfied:

$$0.80 \leq Fb6 \leq 1.40;$$

and
at least one of $10.00 \leq FcR1$ and $10.00 \leq FcR2$.

21. The optical lens assembly of claim 20, wherein the blue-glass lens element and the long-wavelength filtering lens element are the same one of the optical lens elements, a merge arranging factor of an object-side surface of the blue-glass lens element is FbcR1, a merge arranging factor of an image-side surface of the blue-glass lens element is FbcR2, and the following conditions are satisfied:

$$6.00 \leq FbcR1;$$

or

$$6.00 \leq FbcR2.$$

22. The optical lens assembly of claims 20 or 21, wherein a first arranging factor of the blue-glass lens element is Fb1, and the following condition is satisfied:

$$Fb1 \leq 1.40.$$

23. The optical lens assembly of any one of claims 20 to 22, wherein a second arranging factor of the blue-glass lens element is Fb2, and the following condition is satisfied:

$$Fb2 \leq 0.25.$$

24. The optical lens assembly of any one of claims 20 to 23, wherein a third arranging factor of the blue-glass lens element is Fb3, and the following condition is satisfied:

$$0.60 \leq Fb3 \leq 1.80.$$

25. The optical lens assembly of any one of claims 20 to 24, wherein a fourth arranging factor of the blue-glass lens element is Fb4, and the following condition is satisfied:

$$Fb4 \leq 0.08.$$

26. The optical lens assembly of any one of claims 20 to 25, wherein a fifth arranging factor of the blue-glass lens element is Fb5, and the following condition is satisfied:

$$0.08 \leq Fb5 \leq 0.30.$$

27. The optical lens assembly of any one of claims 20 to 26, wherein an effective diameter arranging factor of the blue-glass lens element is FbY, and the following condition is satisfied:

$$0 \leq FbY \leq 0.26.$$

28. The optical lens assembly of any one of claims 20 to 27, wherein a comprehensive arranging factor of the blue-glass lens element is FB, and the following condition is satisfied:

$$2.00 \leq FB \leq \infty.$$

29. The optical lens assembly of any one of claims 20 to 28, wherein a total focal length of the optical lens assembly is F, a maximum field of view of the optical lens assembly is FOV, and the following condition is satisfied:

$$\tan(FOV/2) \times F \leq 4.0.$$

30. The optical lens assembly of any one of claims 20 to 29, wherein a total number of layers of the long-wavelength filtering coating membrane is tLs, and the following condition is satisfied:

$$20 \leq tLs \leq 60.$$

31. The optical lens assembly of any one of claims 20 to 30, wherein a total thickness of the long-wavelength filtering coating membrane is tTk, and the following condition is satisfied:

$$4500 \text{ nm} \leq tTk \leq 8000 \text{ nm}.$$

32. The optical lens assembly of any one of claims 20 to 31, wherein a total thickness of the high refractive index layer is HtTk, a total thickness of the low refractive index layer is LtTk, and the following condition is satisfied:

$$1.30 \leq LtTk/HtTk \leq 1.80.$$

33. The optical lens assembly of any one of claims 20 to 32, wherein a refractive index of the high refractive index layer is NH, a refractive index of the low refractive index layer is NL, and the following condition is satisfied:

$$0.80 \leq NH-NL \leq 1.50.$$

**34.** An electronic device, **characterized in** comprising:
the optical lens assembly of any one of claims 20 to 33.

Fig. 1

EP 4 664 163 A1

Fig. 2

Fig. 3

# EUROPEAN SEARCH REPORT

**Application Number**

EP 25 18 0625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 1 752 786 A (JINGDIE SCIENCE & TECH CO LTD [CN]) 29 March 2006 (2006-03-29) * claims 3,7; figures 1-3 * | 1-34 | INV. G02B5/20 G02B13/00 G02B5/22 |
| X | CN 111 812 805 A (NANCHANG O FILM PHOTOELECTRIC TECH CO LTD) 23 October 2020 (2020-10-23) * figure 15; example 8 * | 1-34 | |
| X | US 7 064 909 B2 (PRODISC TECHNOLOGY INC [TW]) 20 June 2006 (2006-06-20) * claim 5; figures 1-3 * | 1-34 | |
| X | US 2014/016188 A1 (LIU HSING-YA [TW]) 16 January 2014 (2014-01-16) * claims 1-9; figures 1-4 * | 1-34 | |
| X | US 2021/006692 A1 (YAN JUNJIE [CN]) 7 January 2021 (2021-01-07) * claims 1-3; figure 2 * | 1-34 | |
| X | CN 109 425 966 A (NANCHANG O FILM OPTICAL ELECTRONIC TECH CO LTD) 5 March 2019 (2019-03-05) * figure 9; example 5 * | 1-34 | TECHNICAL FIELDS SEARCHED (IPC) G02B |
| X | CN 110 196 482 A (NANCHANG O FILM OPTICAL ELECTRONIC TECH CO LTD; O FILM JAPAN CO LTD) 3 September 2019 (2019-09-03) * figure 7; example 4 * | 1-34 | |
| X | TW 200 918 978 A (APTEK OPTICAL CORP [TW]) 1 May 2009 (2009-05-01) * figures 8-12 * | 1-34 | |

The present search report has been drawn up for all claims

| Place of search | Date of completion of the search | Examiner |
|---|---|---|
| Munich | 7 November 2025 | Daffner, Michael |

EPO FORM 1503 03.82 (P04C01)

## ANNEX TO THE EUROPEAN SEARCH REPORT
## ON EUROPEAN PATENT APPLICATION NO.

EP 25 18 0625

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| CN 1752786 | A | 29-03-2006 | NONE | | |
| CN 111812805 | A | 23-10-2020 | CN | 111812805 A | 23-10-2020 |
| | | | EP | 3772668 A1 | 10-02-2021 |
| | | | JP | 6650068 B1 | 19-02-2020 |
| | | | JP | 2021026143 A | 22-02-2021 |
| | | | KR | 20210018782 A | 18-02-2021 |
| | | | TW | 202107142 A | 16-02-2021 |
| | | | US | 2021041666 A1 | 11-02-2021 |
| US 7064909 | B2 | 20-06-2006 | NONE | | |
| US 2014016188 | A1 | 16-01-2014 | TW | 201403143 A | 16-01-2014 |
| | | | US | 2014016188 A1 | 16-01-2014 |
| US 2021006692 | A1 | 07-01-2021 | CN | 210016537 U | 04-02-2020 |
| | | | JP | 2021009389 A | 28-01-2021 |
| | | | US | 2021006692 A1 | 07-01-2021 |
| | | | WO | 2021000258 A1 | 07-01-2021 |
| CN 109425966 | A | 05-03-2019 | CN | 109425966 A | 05-03-2019 |
| | | | EP | 3451038 A1 | 06-03-2019 |
| | | | JP | 2019045654 A | 22-03-2019 |
| | | | KR | 20190024732 A | 08-03-2019 |
| | | | TW | 201913168 A | 01-04-2019 |
| | | | US | 2019064485 A1 | 28-02-2019 |
| CN 110196482 | A | 03-09-2019 | CN | 110196482 A | 03-09-2019 |
| | | | EP | 3531180 A1 | 28-08-2019 |
| | | | JP | 2019148615 A | 05-09-2019 |
| | | | KR | 20190103051 A | 04-09-2019 |
| | | | TW | 201937915 A | 16-09-2019 |
| | | | US | 2019265440 A1 | 29-08-2019 |
| TW 200918978 | A | 01-05-2009 | TW | 200918978 A | 01-05-2009 |
| | | | US | 2009097103 A1 | 16-04-2009 |

EPO FORM P0459

For more details about this annex : see Official Journal of the European Patent Office, No. 12/82